# FASCICULE DE BREVET EUROPEEN

(11) **EP 4 040 028 B1**
(45) Date de publication et mention de la délivrance du brevet: **14.08.2024**
(21) Numéro de dépôt: 22155219.3
(22) Date de dépôt: 04.02.2022
(51) Int. Cl.: F16L 37/092, F16L 37/12, F16L 37/42

(54) **ÉLÉMENT DE RACCORD**
ANSCHLUSSELEMENT
CONNECTION ELEMENT

(30) Priorité: 05.02.2021 FR 2101122
(43) Date de publication de la demande: 10.08.2022
(73) Titulaire: Staubli Faverges, 74210 Faverges-Seythenex (FR)
(72) Inventeur: DURIEUX, Christophe, 73200 GILLY SUR ISERE (FR); MARQUES BARROCA, Serafim, 73200 ALBERTVILLE (FR)
(74) Mandataire: Lavoix

(56) Documents cités:
- EP-A2- 2 039 974
- WO-A1-2014/133253
- KR-A- 20130 025 696

## Description

La présente invention concerne un élément de raccord pour une connexion rapide d'une conduite de fluide à un terminal.

L'élément de raccord de l'invention vise en particulier à être connecté à un terminal porté par, ou constituant, une extrémité de conduite de liquide pour un moteur thermique, appartenant à un banc de test moteur. Le fluide transporté est donc par exemple un liquide de refroidissement, un carburant, un lubrifiant, un gaz d'échappement ou de l'air. Toutefois, la présente invention peut être mise en oeuvre pour tout autre type de terminal et de fluide.

KR20130025696A concerne un dispositif de raccordement de tuyaux, avec un premier élément de corps apte à recevoir le tuyau et des éléments étanches disposés à l'intérieur du premier élément de corps pour assurer l'étanchéité du corps avec le tuyau. Le dispositif de raccordement comprend aussi une bague de maintien avec des patins radialement mobiles, pour solidariser le tuyau avec le premier élément de corps.

WO2014133253A1 concerne un dispositif de raccordement de tuyaux, comprenant un logement apte à recevoir le tuyau, une garniture d'étanchéité pour assurer l'étanchéité entre le logement et le tuyau, une bague portant des patins pour solidariser le tuyau avec le logement.

EP3247931 B1 divulgue un élément de raccord pour une connexion rapide avec un organe effecteur fileté ou profilé. L'élément de raccord comporte un corps principal et des étriers, qui coulissent radialement dans des logements du corps, entre une première position dans laquelle les étriers sont à distance de l'effecteur, et une deuxième position dans laquelle les étriers engagent l'organe effecteur pour le maintenir emmanché au sein du corps principal. Un corps auxiliaire commande la position des étriers en translatant axialement par rapport au corps principal. Pour cela, une partie fonctionnelle conique du corps auxiliaire actionne des broches de régulation respectives des étriers lors de la translation du corps auxiliaire.

EP3320250B1 divulgue un élément de raccord rapide avec un terminal. Pour s'accoupler avec le terminal, l'élément de raccord présente des mâchoires, qui sont déplacées radialement en étant guidées par un anneau de guidage radial.

Un inconvénient de l'art antérieur est que les raccords sont sujets à des déconnexions lorsque la qualité et les dimensions du terminal à connecter varient, notamment lorsque l'interface du terminal est usée. Cela se produit notamment lorsque le terminal à connecter présente un diamètre trop faible, par rapport au diamètre nominal d'un terminal standard pour lequel les mâchoires ont été conçues. Dans ce cas, il est possible que les mâchoires ne serrent pas suffisamment le terminal pour le retenir accouplé avec l'élément de raccord, voire n'entrent pas en prise avec ledit terminal.

Un objectif de l'invention est notamment de remédier à cet inconvénient en proposant un nouvel élément de raccord, qui peut être accouplé de façon fiable avec des terminaux dont les dimensions et la qualité de l'interface sont variables.

L'invention a pour objet un élément de raccord, pour une connexion rapide d'une conduite de fluide à un terminal, le terminal disposant d'une interface à enveloppe cylindrique, l'élément de raccord comprenant un corps conçu pour être solidarisé avec la conduite de fluide et délimitant un passage interne pour le fluide, le passage interne s'étendant suivant un axe d'emmanchement de l'élément de raccord. Selon l'invention, le corps comprend une portion conique, centrée sur l'axe d'emmanchement. Selon l'invention, l'élément de raccord comprend en outre : une douille, qui est mobile en translation par rapport au corps suivant l'axe d'emmanchement ; un premier organe de rappel élastique, qui applique un premier effort de rappel élastique sur la douille, par rapport au corps, suivant une direction avant, et des patins de serrage, chaque patin de serrage étant reçu dans un logement respectif appartenant à la douille, les patins de serrage étant déplacés en translation radialement par rapport à la douille, au sein de leur logement respectif, par coopération mécanique des patins de serrage avec la portion conique, entre : une position radiale de retrait des patins de serrage, pour que les patins de serrage soient distants de l'interface du terminal et une position radiale de serrage des patins de serrage, pour que les patins de serrage coopèrent mécaniquement avec l'interface du terminal.

Selon l'invention, l'élément de raccord comprend également une bague d'appui, qui est mobile en translation par rapport au corps suivant l'axe d'emmanchement et qui comprend une face circonférentielle, par l'intermédiaire de laquelle la bague d'appui est en contact étanche avec le corps, et une face avant perpendiculaire à l'axe d'emmanchement. L'élément de raccord comprend également un deuxième organe de rappel élastique, qui est constitué par un ressort, qui applique un deuxième effort de rappel élastique sur la bague d'appui, en prenant appui sur le corps, le deuxième effort de rappel élastique étant dirigé suivant la direction avant, pour mettre la bague d'appui en contact étanche avec le terminal par l'intermédiaire de la face avant.

Grâce à l'invention, la position radiale de serrage des patins de serrage est déterminée par les dimensions effectives de l'interface du terminal qui est accouplé avec l'élément de raccord. En effet, par appui radial du terminal sur les patins de serrage, les patins de serrage se positionnent axialement le long de la portion conique, alors que les patins de serrage sont maintenus en appui radial contre le terminal sous l'action combinée du premier effort de rappel élastique, transmis aux patins de serrage par la douille, et de la coopération mécanique entre les patins de serrage et la portion conique, exerçant un renvoi d'angle. En position radiale de serrage, les patins de serrage sont en équilibre entre l'effort de rappel élastique transmis par la douille, un appui oblique des patins de serrage sur la portion conique, et un appui radial des patins de serrage sur l'interface du terminal. La position axiale de la douille le long de la portion conique, ainsi que la position radiale de serrage obtenue pour les patins de serrage, dépendent alors des dimensions de l'interface du terminal avec lequel l'élément de raccord est présentement accouplé. Les patins de serrage appliquent un effort de serrage radial sur le terminal, qui résulte du premier effort de rappel élastique et ne dépend donc pas, ou peu, des dimensions de l'interface du terminal. Le maintien du terminal par les patins est donc fiable, même si l'interface du terminal ne présente pas des dimensions nominales et/ou est usé.

De préférence, la portion conique définit un demi-angle d'ouverture dont la valeur est comprise entre 3 et 10 degrés, de préférence égale à 5 degrés.

De préférence, chaque patin de serrage présente une surface cylindrique centrée sur l'axe d'emmanchement, par l'intermédiaire de laquelle le patin de serrage est conçu pour coopérer mécaniquement avec l'interface du terminal lorsque le patin de serrage est en position radiale de serrage.

De préférence, chaque surface cylindrique porte un filetage ou un traitement de surface augmentant son coefficient de frottement.

De préférence, un diamètre d'étanchéité entre la face avant et le terminal est plus petit qu'un diamètre d'étanchéité entre la face circonférentielle et le corps.

De préférence, le corps et la bague d'appui sont conçus pour délimiter, avec le terminal, un volume intérieur, pour un échange de fluide entre le volume intérieur et le passage interne.

De préférence, la bague d'appui est configurée pour maintenir les patins de serrage dans la position radiale de retrait lorsque l'élément de raccord et le terminal sont désaccouplés.

De préférence, la bague d'appui ferme le passage interne lorsque l'élément de raccord et le terminal sont désaccouplés.

De préférence, l'élément de raccord comprend une bague de manoeuvre, qui est mobile jusqu'à une position déverrouillage, pour libérer le terminal alors que les patins de serrage étaient en position radiale de serrage et coopéraient ainsi mécaniquement avec l'interface du terminal.

De préférence, la bague de manoeuvre et la douille sont solidaires en translation par rapport au corps, suivant l'axe d'emmanchement.

De préférence, la portion conique est tournée vers l'extérieur et diverge suivant la direction avant.

De préférence, la portion conique est tournée vers l'intérieur et converge suivant la direction avant.

L'invention sera mieux comprise et d'autres avantages de celle-ci apparaîtront à la lumière de la description suivante, exposant des exemples conformes à son principe, en référence aux dessins annexés suivants.
[Fig 1] La figure 1 est une vue en coupe longitudinale d'un élément de raccord, selon un premier mode de réalisation conforme à l'invention.
[Fig 2] La figure 2 est une vue en coupe similaire à celle de la figure 1, où l'élément de raccord est accouplé avec un terminal.
[Fig 3] La figure 3 est une vue en coupe transversale de l'élément de raccord suivant le trait III-III montré sur la figure 2.
[Fig 4] La figure 4 est une vue en perspective d'une douille appartenant à l'élément de raccord des figures précédentes.
[Fig 5] La figure 5 est une vue en perspective d'un patin de serrage appartenant à l'élément de raccord des figures précédentes.
[Fig 6] La figure 6 est une vue en coupe longitudinale d'un élément de raccord, selon un deuxième mode de réalisation conforme à l'invention.
[Fig 7] La figure 7 est une vue en coupe similaire à celle de la figure 6, où l'élément de raccord est accouplé avec un terminal.
[Fig 8] La figure 8 est une vue en coupe longitudinale d'un élément de raccord, selon un troisième mode de réalisation conforme à l'invention.
[Fig 9] La figure 9 est une vue en coupe similaire à celle de la figure 8, où l'élément de raccord est accouplé avec un terminal.
[Fig 10] La figure 10 est une vue en coupe longitudinale d'un élément de raccord, selon un quatrième mode de réalisation conforme à l'invention, montré accouplé avec un terminal.
[Fig 11] La figure 11 est une vue en coupe longitudinale d'un élément de raccord, selon un cinquième mode de réalisation conforme à l'invention.
[Fig 12] La figure 12 est une vue en coupe similaire à celle de la figure 11, où l'élément de raccord est accouplé avec un terminal.
[Fig 13] La figure 13 est une vue en coupe longitudinale d'un élément de raccord, selon un sixième mode de réalisation conforme à l'invention.
[Fig 14] La figure 14 est une vue en coupe similaire à celle de la figure 13, où l'élément de raccord est accouplé avec un terminal.

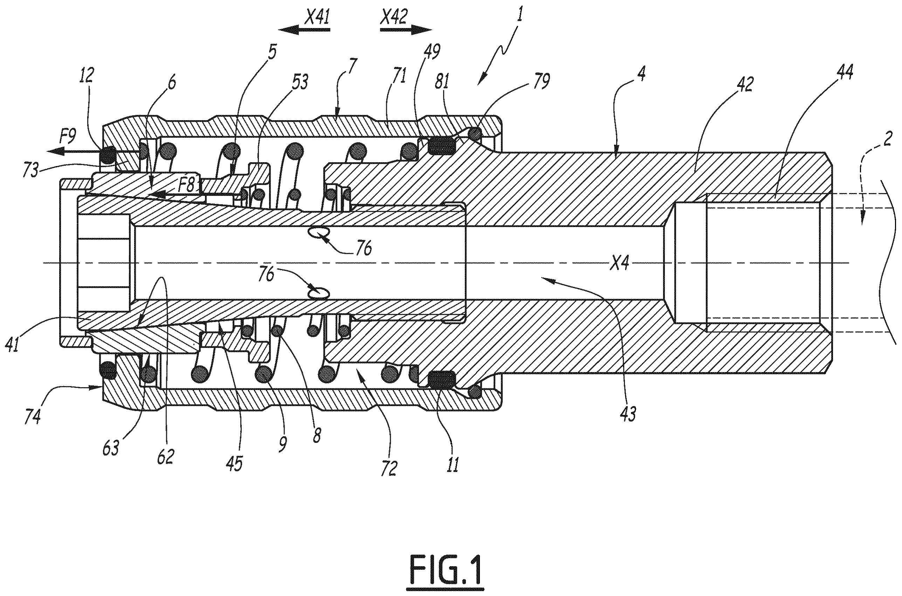

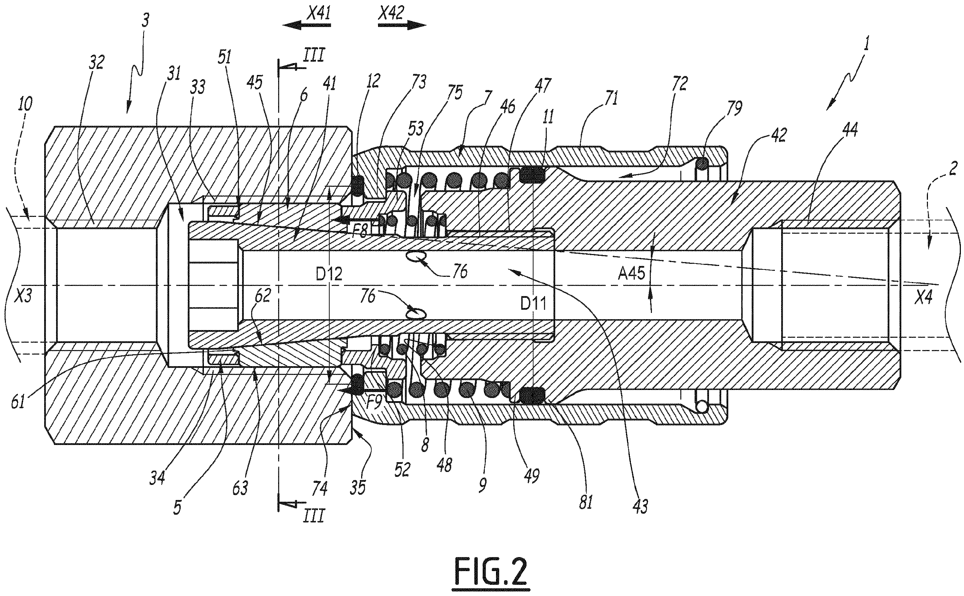

Les figures 1 et 2 montrent un élément de raccord 1 selon un premier mode de réalisation, qui est fluidiquement raccordé à une conduite de fluide 2. La figure 2 montre un terminal 3, qui est fluidiquement raccordé à une conduite de fluide 10. L'élément de raccord 1 et le terminal 3 constituent ensemble un raccord rapide, c'est-à-dire que l'élément de raccord 1 est conçu pour une connexion rapide avec le terminal 3. Plus précisément, l'élément de raccord 1 est conçu pour évoluer entre une configuration accouplée, montrée sur la figure 2, où l'élément de raccord 1 est fluidiquement raccordé au terminal 3, et une configuration désaccouplée, montrée sur la figure 1, où l'élément de raccord 1 est séparé du terminal 3. En configuration accouplée, l'élément de raccord 1 et le terminal 3 conduisent un échange de fluide entre les conduites 2 et 10.

De préférence, le fluide ainsi échangé vise à alimenter, ou est émis par, un moteur thermique, notamment appartenant à un banc de test moteur. Le fluide transporté est donc par exemple un liquide de refroidissement, un carburant, un lubrifiant, un gaz d'échappement ou de l'air. Toutefois, le raccord peut être mis en oeuvre pour un autre type de fluide et pour une autre application.

Comme montré sur la figure 2, le terminal 3 définit un axe principal X3 du terminal 3. Les expressions telles que « axial », « radial », « centrifuge », « centripète », « longitudinal » et « transversal » concernant le terminal 3 et la conduite 10 se rapportent à l'axe X3, sauf mention du contraire.

Le terminal 3 est formé par un corps tubulaire d'un seul tenant, qui s'étend le long de l'axe X3 et est centré sur l'axe X3. Le terminal 3 délimite un passage interne 31 pour le fluide, lui-même centré sur l'axe X3, s'étendant suivant l'axe X3 et débouchant à une extrémité distale du terminal 3 pour pouvoir être accouplé avec l'élément de raccord 1, et à une extrémité proximale pour être fluidiquement raccordé à la conduite 10.

L'élément de raccord 1 est prévu pour être accouplé avec le terminal 3 via une extrémité distale du passage 31. Cette extrémité distale du passage 31 constitue une interface 33, pour l'accouplement du terminal 3, qui présente une enveloppe cylindrique coaxiale avec l'axe X3. Autrement dit, l'interface 33 est formée par le débouchant distale du passage 31. L'interface 33 forme préférentiellement un filetage distal 34, qui est ici un taraudage, à une extrémité distale du passage 31, centré sur l'axe X3 et par l'intermédiaire duquel le terminal 3 peut ainsi être accouplé.

Le terminal 3 forme préférentiellement un filetage proximal 32, qui est ici un taraudage, à une extrémité proximale du passage 31, centré sur l'axe X3. Le terminal 3 est solidarisé avec la conduite 10 par l'extrémité proximale du passage 31, de préférence par l'intermédiaire de ce filetage 32, afin de fluidiquement raccorder la conduite 10 et le terminal 3, pour que le fluide soit échangé et conduit entre l'intérieur de la conduite 10 et le passage 31.

L'élément de raccord 1 comprend un corps 4, une douille 5, des patins de serrage 6, une bague 7, un ressort 8 et un ressort 9.

Le corps 4 définit un axe d'emmanchement X4 de l'élément de raccord 1. En configuration d'accouplement, les axes X3 et X4 sont coaxiaux. Les expressions telles que « axial », « radial », « centrifuge », « centripète », « longitudinal » et « transversal » concernant l'élément de raccord 1 et la conduite 2 se rapportent à l'axe X4, sauf mention du contraire. Le corps 4 définit aussi une direction avant X41 et une direction arrière X42, de sens opposé, et parallèles à l'axe X4. En ce qui concerne l'élément de raccord 1 et la conduite 2, les expression « avant » et « arrière » se rapportent respectivement aux directions X41 et X42.

Le corps 4 présente une forme générale tubulaire centrée sur l'axe X4, en délimitant un passage interne 43 pour le fluide, lui-même centré sur l'axe X4, s'étendant suivant l'axe X4 et débouchant dans les directions X41 et X42. Le corps 4 comprend une partie avant 41 et une partie arrière 42, qui sont fixement solidaires l'une avec l'autre. Les parties 41 et 42 sont successivement traversées par le passage interne 43, qu'elles délimitent. Autrement dit, les parties 41 et 42 sont toutes deux tubulaires et centrées sur l'axe X4, la partie 41 étant agencée dans la direction X41 par rapport à la partie 42.

La partie arrière 42 forme préférentiellement un filetage 44, à une extrémité arrière du passage 43, centré sur l'axe X4. Le corps 4 est solidarisé avec la conduite 2 par l'intermédiaire de l'extrémité arrière du passage 43, de préférence via ce filetage 44, afin de fluidiquement raccorder la conduite 2 et le corps 4, pour que le fluide soit échangé et conduit entre l'intérieur de la conduite 2 et le passage 43.

Pour que les parties 41 et 42 soit fixement solidaires, on prévoit préférentiellement que la partie 41 porte un filetage 46 à son extrémité arrière, ici un filetage extérieur, et que la partie 42 porte un filetage 47 à son extrémité avant, ici un filetage intérieur, de sorte que les parties 41 et 42 sont vissées l'une dans l'autre via les filetages 46 et 47. Les filetages 46 et 47 sont avantageusement centrés sur l'axe X4.

La partie avant 41 présente une surface extérieure, qui s'étend autour d'une extrémité avant du passage 43 et qui constitue une portion conique 45. La portion conique 45 est centrée sur l'axe X4. La portion conique 45 est tournée vers l'extérieur, c'est-à-dire à l'écart de l'axe X4. La portion conique diverge suivant la direction avant X41, c'est-à-dire qu'elle va en s'agrandissant suivant la direction X41. La portion conique 45 définit avantageusement un demi-angle d'ouverture A45, dont la valeur est comprise entre 3 et 10 degrés, de préférence égale à 5 degrés. Ce demi-angle d'ouverture A45 constitue l'angle de cône, c'est-à-dire l'angle qui sépare la portion conique 45 de l'axe X4. Autrement dit, deux génératrices diamétralement opposées de la portion conique 45 forment un angle dont la valeur vaut deux fois celle du demi-angle A45. La plage de valeurs proposée pour le demi-angle A45 assure la fiabilité du verrouillage du terminal 3 par les patins 6 par coopération mécanique des patins 6 avec la portion conique 45, comme expliqué ci-après.

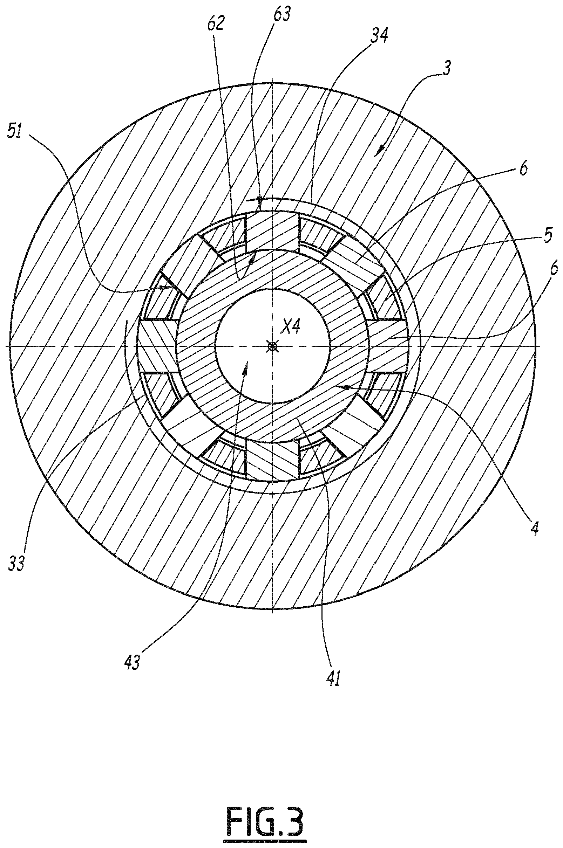

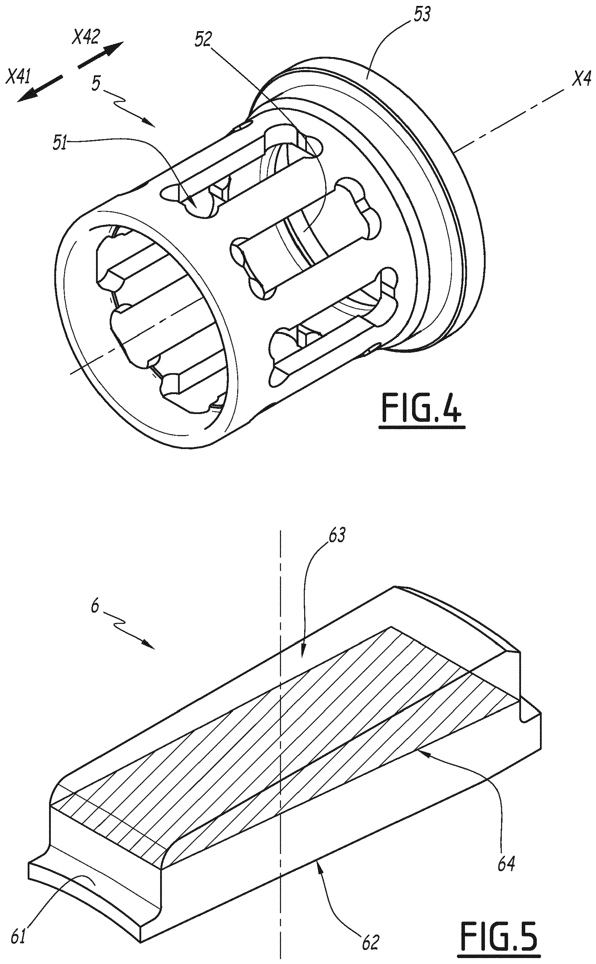

La douille 5, visible sur les figures 1 à 3 et représentée seule sur la figure 4, est de forme tubulaire centrée sur l'axe X4. La douille 5 est agencée autour de la portion conique 45. La douille 5 est agencée de sorte à pouvoir translater par rapport au corps 4 parallèlement à l'axe X4, le long de la portion conique 45.

La douille 5 ménage des logements 51, ici huit logements 51. De préférence les logements 51 sont régulièrement répartis autour de l'axe X4. Chaque logement 51 est constitué par une ouverture qui traverse radialement la douille 5. Autrement dit, chaque logement 51 est centré sur un axe radial respectif. De préférence chaque logement 51 présente avantageusement une section rectangulaire. Dans l'exemple illustré, on prévoit que le logement 51 présente quatre parois parallèles deux à deux, dont deux parois axiales et deux parois orthoradiales, c'est-à-dire deux parois qui sont perpendiculaires à un axe perpendiculaire à un axe radial.

Les patins de serrage 6 sont visibles sur les figures 1 à 3, et l'un des patins 6 est représenté seul sur la figure 5. Chaque patin de serrage 6 est reçu au sein de l'un des logements 51. Chaque patin 6 dépasse de son logement 51 respectif radialement vers l'intérieur et radialement vers l'extérieur. Chaque patin 6 présente une portion prismatique de section 64 rectangulaire, dans un plan perpendiculaire à l'axe radial de son logement 51. Par complémentarité de cette portion prismatique et des parois du logement 51, le patin 6 est guidé en translation radiale dans le logement 51. Autrement dit, chaque patin 6 peut radialement translater par rapport à la douille 5, tout en étant empêché en rotation par le logement 51. Il en résulte que les patins 6 et la douille 5 sont solidaires en translation par rapport au corps 4, suivant l'axe X4, par coopération mécanique des logements 51 avec son patin 6 respectif. Pour le moins, la douille 5 entraîne les patins 6 en translation suivant l'axe X4.

De préférence, pour s'assurer que chaque patin 6 reste capturé par la douille 5 même en configuration désaccouplée, la translation centrifuge du patin 6 par rapport à la douille 5 est bornée à une position radiale externe du patin 6, dite « position radiale de butée », où le patin 6 est en butée contre la douille 5 dans la direction centrifuge. A cette fin, par exemple, chaque patin 6 comprend un talon 61, qui entre en butée contre une surface radiale interne de la douille 5 lorsque le patin 6 atteint la position radiale de butée. Pour cela, le talon 61 est agencé radialement entre la douille 5 et la portion conique 45.

Le ressort 8, qui est un ressort de compression, est axialement interposé entre la douille 5 et le corps 4, en particulier la partie arrière 42. Le ressort 8 est coaxial avec l'axe X4. Par exemple, le ressort 8 est un ressort hélicoïdal centré sur l'axe X4. On prévoit avantageusement que le ressort 8 est interposé entre un col intérieur 52 appartenant à la douille 5, et une surface axiale avant 48 formée à l'extrémité avant de la partie arrière 42 du corps 4, en retrait dans la direction arrière X42 par rapport à la portion conique 45. Le ressort 8 constitue un organe de rappel élastique, qui applique un effort de rappel élastique F8 sur la douille 5, en prenant appui sur le corps 4, cet effort F8 étant dirigé suivant la direction avant X41. Autrement dit, on prévoit un organe de rappel élastique qui tend à faire translater la douille 5 dans la direction avant X41.

Du côté de l'axe X4, donc de la portion conique 45, chaque patin 6 présente avantageusement une surface conique 62, complémentaire de la portion conique 45 du corps 4. Cette surface conique 62 est donc centrée sur l'axe X4 et forme un demi-angle égal au demi-angle A45. Par solidarité en translation axiale des patins 6 et de la douille 5, la douille 5 transmet l'effort F8 aux patins 6. L'effort F8 reçu par la douille 5 résulte en un maintien des patins 6 en appui oblique contre la portion conique 45, par l'intermédiaire de leur surface conique 62 respective. Ainsi, la position radiale des patins 6 par rapport à la douille 5 dépend de la position axiale des patins 6 par rapport au corps 4, par coopération mécanique entre les patins 6 et la portion conique 45. Plus la douille 5 et les patins 6 sont déplacés dans la direction avant X41, plus les patins 6 ont une position radialement externe par rapport à la douille 5 sous l'action de la portion conique 45. Plus la douille 5 et les patins 6 sont déplacés dans la direction arrière X42, plus les patins 6 sont translatés par rapport à la douille 5 de façon centripète, en y étant autorisés par la portion conique 45.

Comme montré sur la figure 1, en configuration désaccouplée, les patins 6 sont radialement dans la position radiale de butée, en y étant maintenus sous l'action de l'effort F8 transmis par la douille 5, et par appui oblique des patins 6 contre la portion conique 45. En position radiale de butée, les patins 6 émergent nettement de la douille 5, ici radialement vers l'extérieur. Lorsque les patins 6 sont en position radiale de butée, la douille 5 est dans une position avant, dit « position axiale de butée » par rapport au corps 4, suivant l'axe X4.

A l'opposé de la surface 62, c'est-à-dire radialement à l'opposé de l'axe X4 et de la portion conique 45, chaque patin 6 présente avantageusement une surface libre, préférentiellement constituée par une surface cylindrique 63. La surface cylindrique 63 est conçue pour coopérer mécaniquement avec l'interface 33 du terminal 3 lorsque l'élément de raccord 1 est en configuration accouplée, pour fixement solidariser le terminal 3 et l'élément de raccord 1 par serrage radial. Pour cela, la surface cylindrique 63 est centrée sur l'axe X4. Sous réserve des dimensions effectives du terminal 3, le rayon de courbure des surfaces 63 correspond au rayon de courbure de l'interface 33 du terminal 3, pour que la coopération mécanique entre les patins 6 et l'interface 33 soit optimale.

Comme montré sur la figure 1, en configuration désaccouplée, la surface cylindrique 63 est avantageusement laissée libre alors que les patins 6 sont en position radiale de butée et la douille 5 en position axiale de butée.

Comme montré sur la figure 2, en configuration accouplée, les patins 6 sont dans une position radiale intermédiaire, dite « position radiale de serrage », par rapport à la douille 5. La position radiale de serrage obtenue dépend des dimensions de l'interface 33 du terminal 3 accouplé. Lorsque les patins 6 sont en position radiale de serrage, la douille 5 et les patins 6 ont une position axiale intermédiaire le long de l'axe X4, dite « position axiale de serrage », par rapport au corps 4. Cette position axiale de serrage dépend elle aussi des dimensions de l'interface 33 du terminal 3, par renvoi d'angle obtenu grâce à la portion conique 45.

En configuration accouplée, chaque patin 6 est radialement interposé entre la portion conique 45, par l'intermédiaire de la surface 62, et l'interface 33, par l'intermédiaire de la surface 63. De préférence, le demi-angle A45 est choisi pour que les patins 6 ne soient pas dans une situation de coincement, ce qui est le cas pour les plages de valeurs susmentionnées pour le demi-angle A45. Les patins 6 étant ainsi positionnés, une adhérence de serrage entre la surface 63 et l'interface 33 est obtenue, propre à retenir le terminal 3 ainsi emmanché avec l'élément de raccord 1 sans que cette position soit irréversible du fait d'un coincement. Cette coopération mécanique entre les patins 6 et l'interface 33 est renforcée par l'effort F8 produit par le ressort 8, lequel tend à maintenir l'adhérence, en poussant les patins 6 dans la direction X41 par l'intermédiaire de la douille 5. Dit autrement, une fonction de la douille 5 et de la portion conique 45 est de convertir l'effort F8 appliqué sur la douille 5 par le ressort 8, en des efforts radiaux externes appliqués par chaque patin 6 sur l'interface 33 du terminal 3, pour une coopération mécanique entre les patins et l'interface 33 retenant le terminal 3 solidaire de l'élément de raccord 1.

De préférence, pour renforcer la coopération mécanique entre la surface 63 et l'interface 33, on prévoit que la surface 63 porte un filetage, qui est avantageusement complémentaire avec le filetage 34 pour venir en prise avec le filetage 34 en configuration d'accouplement. Ainsi, le filetage porté par la surface 63 des patins 6 est préférentiellement coaxial avec l'axe X4. Si le terminal accouplé ne porte pas de filetage, le filetage de la surface 63 peut néanmoins permettre d'augmenter l'adhérence avec l'interface du terminal. En variante, on peut prévoir que la surface 63 des patins 6 présente un traitement de surface qui augmente le coefficient de frottement de la surface 63, vis-à-vis des autres surfaces du patin 6 qui sont prévues pour coulisser, telles que la surface 62 et les surfaces latérales de la portion prismatique du patin 6. Le traitement de surface se caractérise par exemple par une rugosité plus élevée pour la surface 63 que pour les autres surfaces du patin 6.

La bague 7 présente une forme globalement tubulaire et entoure le corps 4. La bague 7 est centrée sur l'axe X4. La bague 7 est mobile en translation par rapport au corps 4 le long de l'axe X4, entre une position axiale avant, dite « position de repos », montrée sur la figure 1, et une position axiale arrière, dite « position de déverrouillage ». La bague 7 peut aussi prendre une position intermédiaire, dite « position d'appui », entre les positions avant et arrière, comme montré sur la figure 2.

La translation de la bague 7 par rapport au corps 4 est guidée par le corps 4, en particulier par la partie arrière 42. Pour cela, la bague 7 comprend avantageusement une partie arrière 71 de forme tubulaire, qui coulisse le long de la partie arrière 42 du corps 4. L'élément de raccord 1 comprend avantageusement un joint 11, qui est radialement interposé entre le corps 4 et la bague 7, en particulier entre la partie arrière 42 et la partie arrière 71. Ici, le joint 11 est placé dans une gorge périphérique ménagée dans la partie arrière 42. Le joint 11 est par exemple un joint torique. Le joint 11 vient en contact radial externe glissant avec une face circonférentielle 72, étant ici constituée par une paroi cylindrique intérieure appartenant à la partie arrière 71 et étant coaxiale avec l'axe X4. Une étanchéité annulaire au fluide est donc assurée entre la face 72 et la partie arrière 42 du corps 4 grâce au joint 11. Autrement dit, la bague 7 est en contact étanche avec le corps 4 par l'intermédiaire de la face circonférentielle 72. L'interface de contact entre le joint 11 et la bague 7 forme un cercle coaxial avec l'axe X4, qui présente un diamètre D11, dit « diamètre d'étanchéité ». Plus généralement, que le joint 11 soit prévu ou non, on prévoit avantageusement que l'étanchéité est prise entre le corps 4 et la face circonférentielle 72 de la bague 7, au niveau d'une interface circulaire qui présente un diamètre d'étanchéité, ici, le diamètre D11.

A son extrémité avant, la bague 7 dispose d'une collerette intérieure 73, qui s'étend radialement vers l'intérieur. La collerette 73 forme un épaulement axial tourné dans la direction X42, et un épaulement axial tourné dans la direction X41. Dans le présent exemple, comme montré sur la figure 1, la collerette 73 délimite une ouverture dont le diamètre est supérieur à l'encombrement radial des patins 6, lorsque les patins sont en position radiale de butée. En configuration désaccouplée, la collerette 73 est avantageusement positionnée à hauteur des patins 6, suivant l'axe X4. La collerette 73 entoure alors les patins 6, en ménageant un jeu radial entre les patins 6 et la collerette 73.

Le ressort 9, qui est un ressort de compression, est axialement interposé entre la bague 7 et le corps 4, en particulier la partie arrière 42. Le ressort 9 est coaxial avec l'axe X4. Ici, le ressort 9 s'étend à l'intérieur de la bague 7, autour du ressort 8, du corps 4 et de la douille 5. Par exemple, le ressort 9 est un ressort hélicoïdal centré sur l'axe X4. On prévoit avantageusement que le ressort 9 est interposé entre la collerette 73 et un col extérieur 49 appartenant au corps 4, ici à la partie arrière 42. Le col extérieur 49 est disposé dans la direction X41 par rapport au joint 11, et borde préférentiellement la gorge recevant ledit joint 11. Le col extérieur 49 est disposé dans la direction X42 par rapport à la collerette 73. Le ressort 9 constitue un organe de rappel élastique, qui applique un effort de rappel élastique F9 sur la bague 7, en prenant appui sur le corps 4, cet effort F9 étant dirigé suivant la direction avant X41. Autrement dit, on prévoit un organe de rappel élastique qui tend à faire translater la bague 7 dans la direction avant X41.

La bague 7 est configurée pour que, lorsque l'on déplace la bague 7 dans la direction X42 par rapport au corps 4, la bague 7 entraîne la douille 5 dans son déplacement. Ce déplacement de la bague 7 peut être effectué par un utilisateur, puisque la bague 7 est sur l'extérieur de l'élément de raccord 1. A cet effet, la douille 5 présente avantageusement une collerette 53, radiale et externe, contre laquelle la collerette 73 vient en appui dans la direction X42. Toutefois, un déplacement dans la direction X41 de la bague 7 n'impose pas de déplacement de la douille 5.

La bague 7 présente une face avant 74, à son extrémité avant. La face avant 74 est perpendiculaire à l'axe X4. On prévoit avantageusement que l'élément de raccord 1 comprend un joint 12, qui est ici porté par la face 74. Le joint 12 est centré sur l'axe X4. Le joint 12 est préférentiellement un joint torique. Le joint 12 est préférentiellement reçu dans une rainure frontale ménagée dans la face avant 74, dont un fond axial est ici formé par l'épaulement axial avant de la collerette 73.

Comme montré sur la figure 1, la face 74 est libre en configuration désaccouplée. Comme montré sur la figure 2, la face 74 vient en appui axial dans la direction X41 contre une face distale 35 du terminal 3, par l'intermédiaire du joint 12. La face distale 35 s'étend à la périphérie de l'interface 33. Autrement dit, le passage 31 débouche de la face distale 35. L'effort F9 maintient l'appui axial de la bague 7 contre le terminal 3, et donc maintient l'étanchéité entre la bague 7 et le terminal 3 par l'intermédiaire du joint 12. En cela, la bague 7 constitue une « bague d'appui ». L'interface de contact entre le joint 12 et le terminal 3 forme un cercle coaxial avec l'axe X4, qui présente un diamètre D12, dit « diamètre d'étanchéité ». Plus généralement, que le joint 12 soit prévu ou non, on prévoit avantageusement que l'étanchéité est prise entre le terminal 3 et la face avant 74 de la bague 7, au niveau d'une interface circulaire qui présente un diamètre d'étanchéité, ici, le diamètre D12.

Comme montré sur la figure 1, en configuration désaccouplée, la bague 7 est dans la position de repos par rapport au corps 4, en étant maintenue en appui axial contre le corps 4 dans la direction X41, par l'effort F9. Cet appui par exemple obtenu par mise en appui dans la direction X41 d'un jonc intérieur 79, portée à l'extrémité arrière de la bague 7, contre un col extérieur 81 formé par la partie arrière 42 du corps 4. De préférence, le col 81 est dans la direction X42 par rapport au joint 11. Le col 81 et le col 49 délimitent avantageusement entre eux la gorge recevant le joint 11.

En configuration accouplée, du fait des étanchéités susmentionnées, le corps 4, la bague 7 et le terminal 3 délimitent ensemble un volume intérieur 75 apte à échanger du fluide avec le passage interne 43. Le volume intérieur 75 est de forme tubulaire. Le volume intérieur 75 est délimité, radialement vers l'extérieur, par la bague 7, le joint 12 s'il est prévu, et l'interface 33. Le volume intérieur 75 est délimité, radialement vers l'intérieur, par le corps 4, en particulier la partie avant 41 et la partie arrière 42, qui séparent radialement le volume intérieur 75 du passage 43. Le volume intérieur 75 est coaxial avec le passage 43. Vers l'arrière, le volume intérieur est délimité par la partie arrière 42 du corps 4 et le joint 11. Vers l'avant, le volume intérieur 75 est délimité par le terminal 3, en particulier la face distale 35 et l'interface 33, par la partie avant 41, partiellement obstrués par la douille 5 et les patins 6. Les ressorts 8 et 9 sont disposés dans le volume intérieur 75, ainsi que l'extrémité arrière de la douille 5. La partie avant 41 du corps 4 comporte avantageusement des ouvertures radiales 76, qui traversent la partie avant 41 de part en part, préférentiellement en débouchant de la portion conique 45, pour relier le passage 43 avec le volume intérieur 75 et ainsi permettre l'échange de fluide entre eux. Du fluide peut également être échangé entre le passage 31 et le volume intérieur 75, via l'interstice annulaire ménagé entre la partie avant 41 et l'interface 33, qui n'est pas obturé de façon étanche par la douille 5 et les patins 6. Le volume intérieur 75 est néanmoins étanche au fluide vis-à-vis de l'extérieur du raccord, par l'étanchéité qui est assurée entre la bague 7 et le terminal 3, et entre la bague 7 et le corps 4.

Le fait de prévoir ce volume intérieur 75 permet de fiabiliser davantage l'accouplement du terminal 3 avec l'élément de raccord 1 lorsque du fluide circule au sein du raccord en configuration accouplée. En effet, dans cette situation, le volume 75 est inondé par du fluide, provenant du passage 43 et/ou du passage 31, qui est sous pression et tend à maintenir l'accouplement. Pour obtenir ce maintien, on prévoit avantageusement que le diamètre d'étanchéité D12 est plus petit que le diamètre d'étanchéité D11, comme montré sur la figure 2, de sorte que la pression du fluide reçu dans le volume 75 résulte en un effort, appliqué contre la bague 7 par rapport au corps 4, dans la direction X41. Pour le moins, on peut prévoir que le diamètre du joint 12 est plus petite que celui du joint 11.

Pour faire passer l'élément de raccord 1 de la configuration désaccouplée à la configuration accouplée, c'est-à-dire accoupler le raccord, on place le terminal 3 et le corps 4 de l'élément de raccord 1 de telle sorte que les axes X3 et X4 soient alignés, alors que l'extrémité distale du terminal 3 fait face à l'extrémité avant de l'élément de raccord 1. On rapproche alors le corps 4 de l'élément 1 et le terminal 3 l'un de l'autre. Avant l'entrée en contact du terminal 3 et de l'élément 1, l'élément 1 est dans la configuration désaccouplée montrée sur la figure 1.

A un premier stade du rapprochement, la face avant 74 de la bague d'appui 7 vient en contact étanche avec la face distale 35 du terminal 3, ici via le joint 12. En poursuivant le rapprochement, les patins 6 arrivent en contact avec un bord distal du passage 31, c'est-à-dire ici à la jonction entre le débouchant du passage 31 et la face distale 35. Dès lors, le rapprochement fait que les patins 6 sont déplacés dans la direction X42 par rapport au corps 4, sous l'action du terminal 3, entraînant avec eux la douille 5, à l'encontre de l'effort F8. Ainsi déplacés dans la direction X42, les patins 6 coulissent le long de la portion conique 45 et se déplacent radialement vers l'intérieur. Ce déplacement des patins 6 se poursuit au fur et à mesure du rapprochement, jusqu'à ce que les patins 6 atteignent la position radiale de serrage, et la douille 5, la position axiale de serrage. Dans cette position radiale de serrage, les patins 6 occupent un encombrement égal ou légèrement inférieur à celui de l'interface 33, de sorte que les patins 6 cessent de se déplacer par rapport au corps 4, étant axialement retenus par l'effort F8, et pénètrent dans le passage 31 en recouvrant l'interface 33.

De préférence, le rapprochement du terminal 3 et du corps 4 prend fin lorsque la collerette intérieure 73 de la bague d'appui 7 vient en appui axial contre la collerette 53 de la douille 5. La configuration d'accouplement montrée sur la figure 2 est alors atteinte. Dans cette situation, tenter d'éloigner le terminal 3 du corps 4 suivant l'axe X4 entraîne, sous l'action du ressort 8, l'application d'un effort de maintien radial par les patins 6 contre l'interface 33 du terminal 3, ce qui maintient l'élément de raccord 1 solidaire du terminal 3.

Pour désaccoupler, c'est-à-dire faire passer l'élément de raccord 1 de la configuration accouplée à la configuration désaccouplée, on repousse d'abord le corps 4 de l'élément de raccord 1 en direction du terminal 3 suivant l'axe X4 pour réduire l'effort radial appliqué par les patins 6 sur l'interface 33 et ainsi désamorcer leur adhérence. Simultanément ou successivement, on déplace la bague 7 dans la direction X42 par rapport au corps 4, vers la position de déverrouillage, à l'encontre de l'effort F9. Alors, l'étanchéité au niveau de la face avant 74 est rompue. Egalement, la bague 7 entraîne la douille 5, et donc les patins 6, dans la direction X42 par rapport au corps 4.

Dans ce mouvement, par coopération mécanique avec la portion conique 45, les patins 6 sont autorisés à se déplacer radialement vers l'intérieur par rapport à la douille 5, c'est-à-dire suivant une direction centripète, jusqu'à une position dite « position radiale de retrait ». Autrement dit, la douille 5 étant déplacée dans la direction X42, les patins 6 sont positionnés à un niveau axial de la portion conique 45 où la portion conique 45 est plus en retrait, radialement vers l'intérieur, autorisant ainsi les patins à être déplacés de façon centripète. Dans cette position radiale de retrait, les patins 6 ne sont plus contraints par la portion conique 45 à exercer un effort contre l'interface 33, voire sont radialement distants de l'interface 33. Dans cette position radiale de retrait, les patins 106 sont disposés à l'intérieur d'un cylindre virtuel, dont le diamètre est inférieur au diamètre de l'interface 33 du terminal 3. La position radiale de retrait dépend de la géométrie de l'interface 33 du terminal 3, et peut donc différer d'un terminal à l'autre. Pour un terminal donné, la position radiale de serrage est une position intermédiaire entre la position radiale de butée et la position radiale de retrait des patins 6. Lorsque les patins 6 sont en position radiale de retrait, la douille 5 est dans une position axiale de retrait, en arrière par rapport à la position axiale de serrage.

Plus généralement, le fait de déplacer la bague 7 vers sa position de déverrouillage, c'est-à-dire vers l'arrière, alors que l'élément de raccord 1 est en configuration accouplée, résulte une libération du terminal 3, faisant ainsi passer l'élément de raccord 1 en configuration désaccouplée. La bague 7 peut donc être qualifiée de « bague de manoeuvre ». Ici, la bague 7 assure donc à la fois une fonction de bague d'appui et de bague de manoeuvre.

Une fois la position radiale de retrait atteinte par les patins, l'élément de raccord 1 et le terminal 3 sont libérés l'un de l'autre, n'étant plus retenus par les patins 6. On peut alors éloigner l'élément de raccord 1 et le terminal 3 suivant l'axe X4 jusqu'à leur séparation complète, puis relâcher la bague 7. Le relâchement de la bague 7 autorise le ressort 8 à ramener la douille 5 dans la direction X41 par rapport au corps 4, sous l'effort F8, jusqu'à ce que les patins 6 atteigne leur position radiale de butée, où leur talon 61 respectif est en butée radiale externe contre la douille 5. On obtient alors la configuration désaccouplée montrée sur la figure 1. Le retour de la bague 7 suivant la direction X41, jusqu'à sa position de repos montrée sur la figure 1, est autorisée grâce au fait que la collerette 73 délimite une ouverture dont le diamètre est supérieur à l'encombrement radial des patins 6, lorsque les patins 6 sont en position radiale de butée.

Pour ce mode de réalisation, il n'est pas prévu que la bague 7 maintienne les patins 6 en position radiale de retrait.

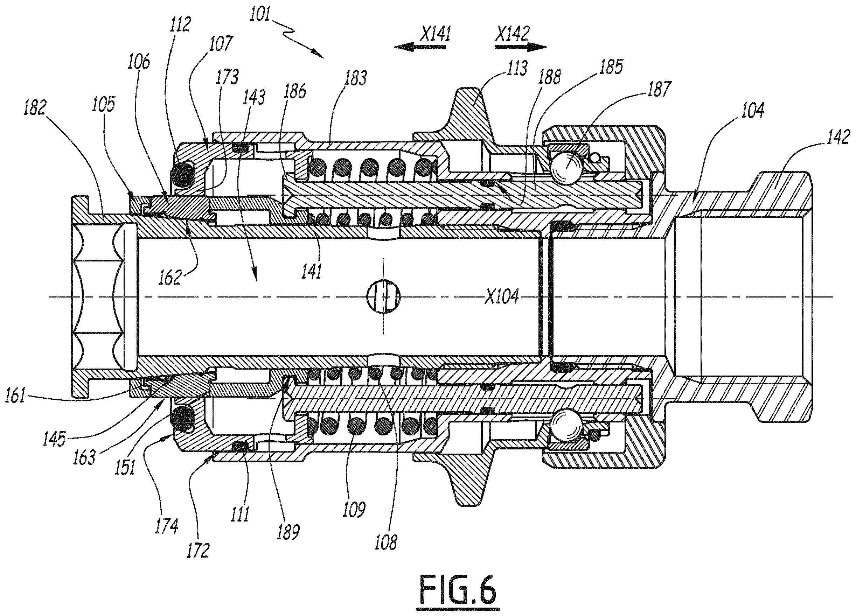

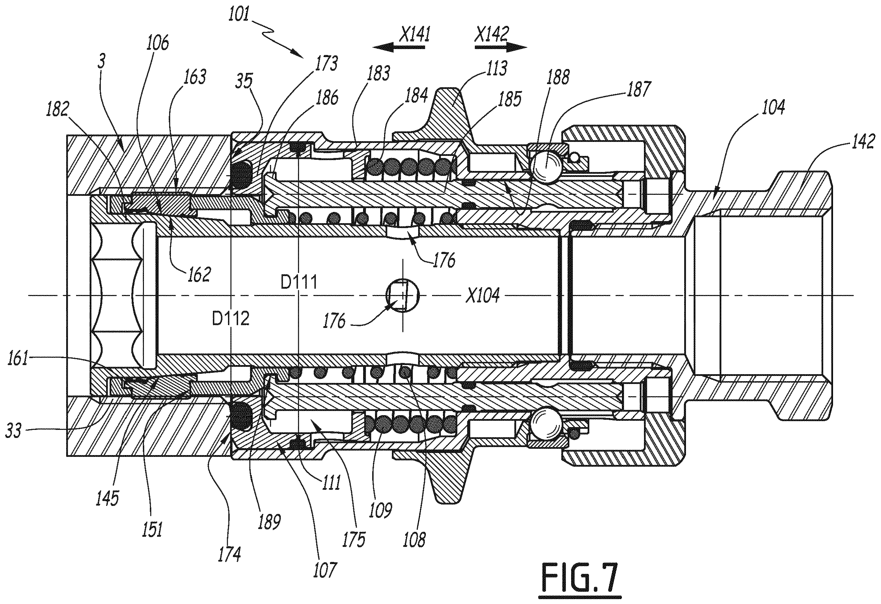

Les figures 6 et 7 montrent un élément de raccord 101 selon un deuxième mode de réalisation. Cet élément de raccord 101 comporte des caractéristiques communes avec l'élément de raccord 1, qui sont identifiées avec le même signe de référence augmenté de 100. Les caractéristiques décrites dans ce qui précède pour l'élément de raccord 1 s'appliquent à l'élément de raccord 101, hormis pour les différences exposées ci-après. Dans ce qui suit, certaines caractéristiques identiques, ou basées sur les mêmes principes, entre l'élément 1 et l'élément 101 ne sont pas réexpliquées et il convient de se référer à la description de l'élément 1.

Sur la figure 6, l'élément 101 est montré en configuration désaccouplée. Sur la figure 7, l'élément 101 est montré en configuration accouplée. L'élément 101 est conçu pour une connexion rapide avec le terminal 3 décrit ci-avant, visible sur la figure 7.

L'élément de raccord 101 comprend un corps 104, une douille 105, des patins de serrage 106, une bague 107, un ressort 108, un ressort 109, et une bague 113.

Le corps 104 est de forme générale tubulaire. L'élément 101 est conçu pour être solidarisé avec la conduite de fluide 2 par l'extrémité arrière du corps 104. Le corps 104 définit un axe d'emmanchement X104 de l'élément de raccord 101. En configuration d'accouplement, les axes X3 et X104 sont coaxiaux. Le corps 104 définit aussi une direction avant X141 et une direction arrière X142, de sens opposé, et parallèles à l'axe X104.

Le corps 104 présente une forme générale tubulaire centrée sur l'axe X104, en délimitant un passage interne 143 pour le fluide, lui-même centré sur l'axe X104, s'étendant suivant l'axe X104 et débouchant dans les directions X141 et X142. Le corps 104 comprend une partie avant 141 et une partie arrière 142, qui sont assemblées de façon fixement solidaire. Les parties 141 et 142 sont successivement traversées par le passage interne 143, qu'elles délimitent.

La partie arrière 142 du corps 104 est conçue pour être solidarisée avec la conduite 2 par l'intermédiaire de l'extrémité arrière du passage 143, afin de fluidiquement raccorder la conduite 2 et le corps 104.

La partie avant 141 comprend une partie interne 182 de forme tubulaire, qui délimite l'extrémité avant du passage 143 et présente une surface extérieure constituant une portion conique 145, autour de l'extrémité avant du passage 143. La portion conique 145 est centrée sur l'axe X4 et est tournée vers l'extérieur. La portion conique 145 diverge suivant la direction avant X141.

La partie avant 141 comprend aussi une partie périphérique 183, qui est solidaire de la partie interne 182, et qui forme une jupe ouverte dans la direction X141, s'étendant autour de la partie interne 182 et étant centrée sur l'axe X104.

La douille 105 est de forme annulaire centrée sur l'axe X104. La douille 105 est agencée autour de la portion conique 145, de sorte à pouvoir translater par rapport au corps 104 parallèlement à l'axe X104, le long de la portion conique 145.

La douille 105 ménage des logements 151, qui sont répartis autour de l'axe X104. Chaque logement 151 est constitué par une ouverture qui traverse radialement la douille 105.

Chaque patin de serrage 106 est reçu au sein de l'un des logements 151, de sorte à être guidé en translation radiale dans ce logement 151. Il en résulte que les patins 106 et la douille 105 sont solidaires en translation par rapport au corps 104, suivant l'axe X4, selon le même principe que pour l'élément de raccord 1. Chaque patin 106 présente un talon 161 pour être maintenu capturé par la douille 105, même en configuration désaccouplée. La translation centrifuge du patin 106 par rapport à la douille 105 est bornée à une position radiale externe du patin 106, dite « position radiale de butée », où le patin 106 est en butée contre la douille 105 dans la direction centrifuge.

Le ressort 108, qui est un ressort de compression, est axialement interposé entre la douille 105 et le corps 104, en particulier la partie périphérique 183. Le ressort 8 est coaxial avec l'axe X4. Le ressort 108 constitue un organe de rappel élastique, qui applique un effort de rappel élastique sur la douille 105, en prenant appui sur le corps 104, cet effort étant dirigé suivant la direction avant X141, pour tendre à ramener la douille 105 dans la direction X141.

Chaque patin 106 présente avantageusement une surface conique 162, complémentaire de la portion conique 145, par l'intermédiaire de laquelle le patin 106 coulisse le long de la portion conique 145. Par coopération mécanique entre les patins 106 et la portion conique 145, la position axiale de la douille 105 et la position radiale des patins 106 par rapport au corps 4 sont fonction l'une de l'autre. Sous l'action du ressort 8, les patins 6 sont maintenus au contact de la portion conique 145.

A l'opposé de la surface 162, chaque patin 106 présente avantageusement une surface cylindrique 163, pour coopérer mécaniquement avec l'interface 33 du terminal 3 en configuration accouplée. Comme montré sur la figure 7, en configuration accouplée, les patins 106 sont dans une position radiale externe, dite « position radiale de serrage », par rapport à la douille 105, pour ainsi coopérer avec l'interface 33. Cette position radiale de serrage correspond à une position avant de la douille 105, dite « position axiale de serrage », le long de l'axe X104, par rapport au corps 104, grâce au renvoi d'angle de la portion conique 145.

La bague 113 présente une forme globalement tubulaire, centrée sur l'axe X104. La bague 113 est avantageusement disposée autour du corps 104, en particulier autour d'une extrémité arrière de la partie périphérique 183, de sorte à pouvoir être actionnée par un utilisateur. La bague 113 est mobile en translation par rapport au corps 104 le long de l'axe X104, entre une position arrière, nommée « position de déverrouillage », montrée sur la figure 6, et une position avant, nommée « position initiale », montrée sur la figure 7.

L'élément de raccord 101 comprend en outre des tirants 185, qui s'étendent parallèlement à l'axe X104. Les tirants 185 sont régulièrement répartis autour de l'axe X104. Les tirants 185 s'étendent radialement à l'intérieur de la bague 113. Chaque tirant 185 est mobile en translation par rapport au corps 104, suivant l'axe X104. Chaque tirant 185 est guidé dans cette translation par un conduits 188 respectif, appartenant au corps 104. De préférence, pour chaque tirant 185, un joint est radialement interposé entre le conduit 188 et ledit tirant 185 pour une obturation étanche des conduits 188 par les tirants 185. Pour chaque tirant 185, l'élément de raccord 101 comprend en outre une billes 187 respective, par l'intermédiaire desquelles le tirant 185 concerné et la bague 113 sont solidaires en translation par rapport au corps 104, suivant l'axe X104. En outre, la douille 105 et les tirants 185 sont solidaires en translation suivant l'axe X104. Pour cela, de préférence, chaque tirant 185 présente une tête 186 respective à son extrémité avant, qui est reçue dans une gorge arrière 189 de la douille 105.

Dès lors, la bague 113, les billes 187, les tirants 185 et la douille 105 constituent un ensemble, qui est solidairement mobile en translation par rapport au corps 104, suivant l'axe X104. Un déplacement axial de la bague 113 entraîne un déplacement de la douille 105, de sorte que la bague 113 peut être qualifiée de « bague de manoeuvre ».

La bague 107 présente une forme globalement tubulaire, centrée sur l'axe X104. La bague 107 disposée autour de la partie interne 182, des patins 106 et de la douille 105, en étant reçue à l'intérieur de la partie périphérique 183. La bague 107 est mobile en translation par rapport au corps 104 le long de l'axe X104, entre une position arrière, dite « position axiale de retrait », montrée sur la figure 6, et une position avant, dite « position axiale de serrage », montrée sur la figure 7. Le guidage en translation de la bague 107 est avantageusement obtenu par coulissement de la bague 107 dans la partie périphérique 183.

En configuration désaccouplée, comme montré sur la figure 6, la bague 107 est dans une position axiale avant, dite « position de repos », en étant en butée axiale contre la tête 186 du tirant 185, suivant la direction X141, alors que la bague 113 est en position de déverrouillage, qui est une position axiale arrière. Plus généralement, le déplacement dans la direction X141 de la bague 107 est limité par la position axiale de la bague de manoeuvre 113. Autrement dit, en étant déplacée dans la direction X142, la bague de manoeuvre 113 peut entraîner la bague 107 dans la direction X142 par rapport au corps 104.

Le ressort 109, qui est un ressort de compression, est axialement interposé entre la bague 107 et le corps 104. Le ressort 109 constitue un organe de rappel élastique, pour appliquer un effort de rappel élastique dans la direction X141 sur la bague 107 par rapport au corps 104, tendant à ramener la bague 107 vers l'avant. De préférence, le ressort 109 est interposé entre une collerette interne arrière 184 de la bague 107 et un épaulement axial avant de la partie périphérique 183 du corps 104. De préférence, c'est également par l'intermédiaire de la collerette 184 que la bague 107 est en butée contre les têtes 186 dans la direction X141.

La bague 107 comprend une face circonférentielle 172, par l'intermédiaire de laquelle la bague 107 est en contact étanche avec une paroi intérieure de la partie périphérique 183 du le corps 104. Le contact étanche est effectué par l'intermédiaire d'un joint 111 reçu dans une gorge périphérique de ladite face 172. Ici, la face circonférentielle 172 est externe, contrairement à l'élément 1 où la face 72 est interne. Ici, c'est la bague 107 qui porte le joint 111, contrairement à l'élément 1 où le corps 4 porte le joint 11. L'interface de contact entre le joint 111 et le corps 104 forme un cercle coaxial avec l'axe X104, qui présente un diamètre d'étanchéité D111.

La bague 107 comprend aussi une face avant 174 qui est conçue pour venir en contact étanche avec la face distale 35 du terminal 3, en configuration accouplée, sous l'action du ressort 109. En cela, la bague 107 constitue une « bague d'appui ». La face avant 174 est préférentiellement formée sur une collerette intérieure 173 de la bague 107, formée à son extrémité avant. Le contact étanche est effectué par l'intermédiaire d'un joint 112 reçu dans une rainure frontale de la face avant 174. L'interface de contact entre le joint 112 et le terminal 3 forme un cercle coaxial avec l'axe X104, qui présente un diamètre d'étanchéité D112, lequel est inférieur au diamètre d'étanchéité D111 formé par le joint 111. De préférence, le joint 112 a un diamètre inférieur à celui du joint 111.

En configuration accouplée, la bague 107 est dans une position arrière, dite « position d'appui », montrée sur la figure 7.

En configuration désaccouplée, comme montré sur la figure 6, alors que la bague 107 est en position de repos, les patins 106 viennent en appui radial contre la collerette 173. Dans cette situation, la bague 107 maintient les patins 106 une position radiale interne, qui constitue une « position radiale de retrait ». Autrement dit, la bague 107 s'oppose à un déplacement dans la direction X141 de la douille 105 malgré l'action du ressort 8, la douille 105 et les patins 106 étant retenus dans une position axiale arrière par rapport au corps 104, dite « position axiale de retrait ». Dans la position radiale de retrait, les patins 106 sont disposés à l'intérieur d'un cylindre virtuel, dont le diamètre est inférieur au diamètre de l'interface 33 du terminal 3. Autrement dit, en configuration désaccouplée, les patins sont dans une position radiale où ils seraient radialement distants de l'interface 33, si l'interface 33 les entourait. Ce maintien des patins 106 en position radiale de retrait par la bague 107 est une différence importante par rapport à l'élément de raccord 1 dans lequel, en configuration désaccouplée, les patins sont en position radiale de butée et non en position radiale de retrait, la bague 7 n'assurant pas le maintien radial des patins 6. Une autre différence est que la bague 107 n'entre pas en contact avec la douille 105, notamment de sorte que la bague 107 n'impose pas de déplacement axial de la douille 105 lorsque la bague 107 est elle-même axialement déplacée.

En configuration accouplée, du fait des étanchéités obtenues pour la face avant 174 et la face circonférentielle 172, le corps 104, la bague 107 et le terminal 3 délimitent ensemble un volume intérieur 175 apte à échanger du fluide avec le passage interne 143, via des ouvertures radiales 176 ménagées au travers de la partie 182. Du fluide peut également être échangé entre le passage 31 et le volume intérieur 175, via l'interstice annulaire ménagé entre la partie avant 141 et l'interface 33.

Le volume intérieur 175 est de forme tubulaire, coaxial avec le passage 143. Le volume intérieur 175 est délimité, radialement vers l'extérieur, par la partie périphérique 183, la bague 107, le joint 112, le joint 111 et l'interface 33. Le volume intérieur 75 est délimité, radialement vers l'intérieur, par la partie 182, qui sépare radialement le volume intérieur 175 du passage 143. Vers l'arrière, le volume intérieur 175 est délimité par la partie 183, par obturation étanche des conduits 188 par les tirants 185. Vers l'avant, le volume intérieur 175 est délimité par le terminal 3, en particulier la face distale 35 et l'interface 33, par la partie 182, partiellement obstrués par la douille 105 et les patins 106. Les ressorts 108 et 109 sont disposés dans le volume intérieur 175. Le volume intérieur 175 est néanmoins étanche au fluide vis-à-vis de l'extérieur du raccord, par l'étanchéité qui est assurée entre la bague 107 et le terminal 3, et entre la bague 107 et le corps 104.

Le fait de prévoir ce volume intérieur 175 permet de fiabiliser davantage l'accouplement du terminal 3 avec l'élément de raccord 101 lorsque du fluide circule au sein du raccord en configuration accouplée, de façon similaire au volume intérieur 75 prévu pour l'élément de raccord 1.

Pour accoupler le raccord, on place le terminal 3 et le corps 104 en alignant les axes X3 et X104, alors que l'extrémité distale du terminal 3 fait face à l'extrémité avant de l'élément de raccord 101. On rapproche alors le corps 104 et le terminal 3 l'un de l'autre. Avant l'entrée en contact du terminal 3 et de l'élément 101, l'élément 101 est dans la configuration désaccouplée montrée sur la figure 6.

Comme montré sur la figure 6, les patins 106 sont maintenus en position radiale de retrait par la bague 107. A un premier stade du rapprochement, les patins 106 pénètrent directement dans le passage 31, sans frotter, ou en frottant peu, avec l'interface 33. En poursuivant le rapprochement, la face avant 174 de la bague d'appui 107 vient en contact étanche avec la face distale 35 du terminal 3, ici via le joint 112. Le rapprochement se poursuivant, la bague 107 est déplacée dans la direction X142 par rapport au corps 104 par le terminal 3, contre l'effort produit par le ressort 109. Lorsque la bague 107 atteint une position axiale intermédiaire entre la position d'appui et la position de repos, la bague 107 autorise les patins 106 à être déplacés vers la position radiale de serrage, par coopération des patins 106 avec la portion conique 145, sous l'action du ressort 8 entraînant axialement la douille 105 dans la direction avant X141 par rapport au corps 104. La douille 105 et la bague 113 étant solidaires en translation axiale par rapport au corps 104, la bague 113 est déplacée, depuis sa position arrière, dans la direction X141 solidairement avec la douille 105.

Ce déplacement axial vers l'avant de l'ensemble incluant la douille 105, les patins 106 et de la bague 113 s'effectue jusqu'à ce que les patins 106 atteignent la position radiale de serrage montrée sur la figure 7. A ce moment-là, l'élément de raccord 101 est en configuration accouplée, la douille 105 et la bague 113 sont dans une position axiale avant, c'est-à-dire dans la position axiale de serrage de la douille 105 et dans la position initiale de la bague 113. Dans cette position axiale de la douille 105 et de la bague 113, les patins 106 sont en position radiale de serrage.

Pour désaccoupler l'élément de raccord 101, on repousse le corps 104 en direction du terminal 3 suivant l'axe X4 pour réduire l'effort radial appliqué par les patins 106 sur l'interface 33 et ainsi désamorcer leur adhérence. Simultanément ou successivement, on déplace la bague 113 dans la direction X142 par rapport au corps 104, à l'encontre de l'effort du ressort 109, jusqu'à la position de déverrouillage. Ce déplacement entraîne solidairement le déplacement de la douille 105 dans la direction X142 par rapport au corps 104, et donc le déplacement des patins 106 vers leur position radiale de retrait, par coopération avec la portion conique 145. L'action de la bague 113 permet donc de libérer le terminal 3 des patins 106, ce en quoi la bague 113 peut être qualifiée de bague de manoeuvre. Lorsque l'on retire le terminal 3, le ressort 109 déplace axialement la bague 107 dans la direction X141, jusqu'à sa position de repos, où la bague 107 vient capturer et maintenir les patins 106 dans leur position radiale de retrait, par l'intermédiaire du col 173. La configuration de désaccouplement de la figure 6 est alors atteinte. Dans cette configuration, la douille 105 est en position axiale de retrait, solidairement avec la bague 113 qui est en position de déverrouillage.

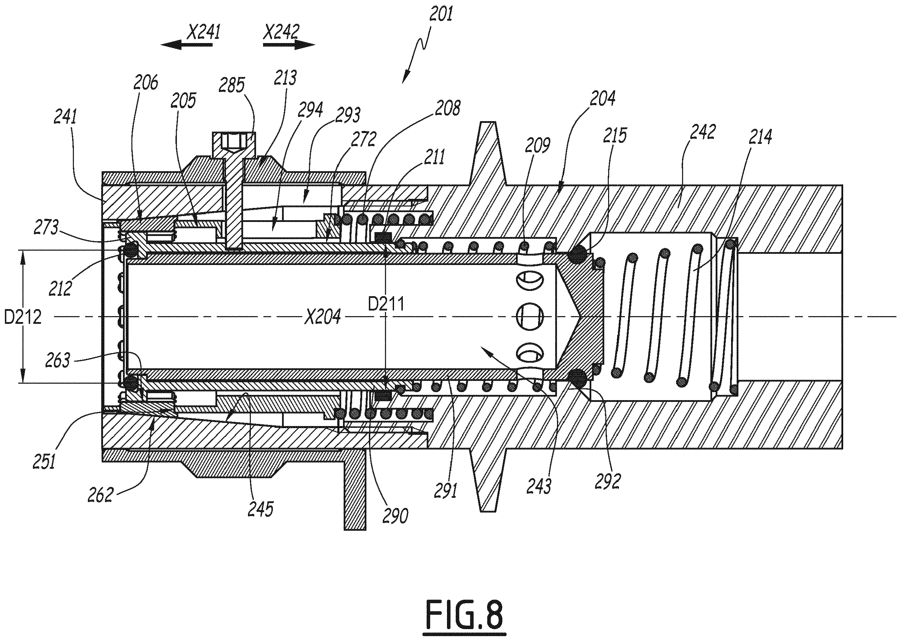

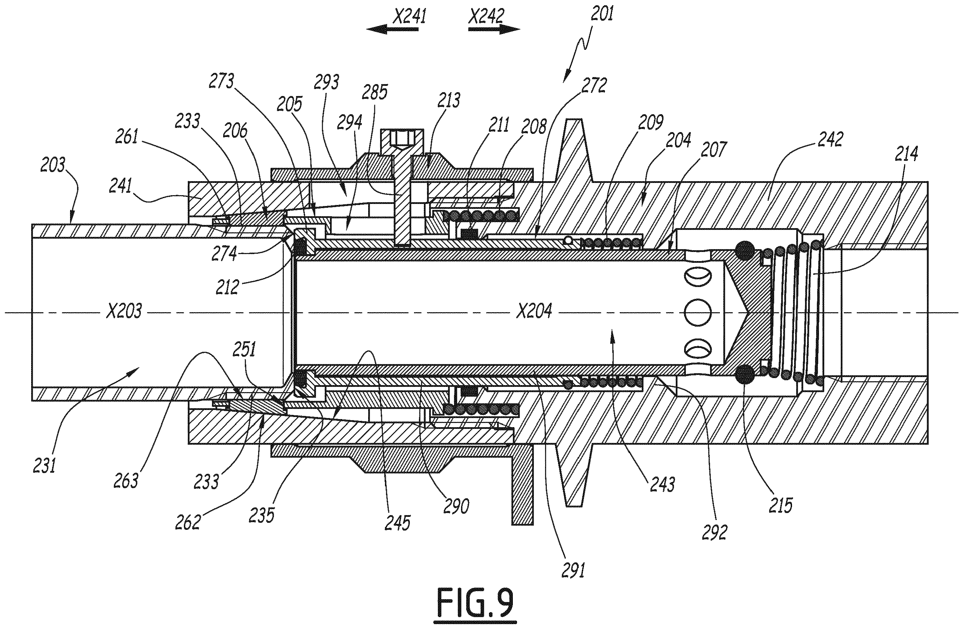

Les figures 8 et 9 montrent un élément de raccord 201 selon un troisième mode de réalisation. Cet élément de raccord 201 comporte des caractéristiques communes avec l'élément de raccord 1 et avec l'élément de raccord 101, qui sont identifiées avec le même signe de référence augmenté de 200 vis-à-vis des signes de références pour l'élément de raccord 1. Les caractéristiques décrites dans ce qui précède pour les éléments de raccord 1 et 101 s'appliquent à l'élément de raccord 201, hormis pour les différences exposées ci-après. Dans ce qui suit, certaines caractéristiques identiques, ou basées sur les mêmes principes, entre l'élément 1, 101 et l'élément 201 ne sont pas réexpliquées et il convient de se référer à la description qui précède.

Sur la figure 8, l'élément 201 est montré en configuration désaccouplée. Sur la figure 9, l'élément 201 est montré en configuration accouplée. L'élément 201 est conçu pour une connexion rapide avec un terminal 203 qui diffère du terminal 3 décrit ci-avant, et qui est visible sur la figure 9.

Le terminal 203 est tubulaire et centré sur un axe X203, et ménage un passage interne 231 pour le fluide. Le terminal 203 présente une interface 233, qui est formée à une extrémité distale du terminal 203. Contrairement à l'interface 33, l'interface 233 est formée sur l'extérieur du terminal 203 et non dans le passage interne. De préférence, l'interface 233 est filetée. Le terminal 203 comporte également une face distale 235 à son extrémité distale, de laquelle débouche le passage 231, et à partir de laquelle l'interface 233 s'étend en direction de l'extrémité proximale du terminal 203.

L'élément de raccord 201 comprend un corps 204, une douille 205, des patins de serrage 206, une bague 207, un ressort 208, un ressort 209, et une bague 213.

Le corps 204 tubulaire s'étend suivant un axe d'emmanchement X204 et définit une direction avant X241 et une direction arrière X242. L'élément 201 est conçu pour être solidarisé avec une conduite de fluide par l'extrémité arrière du corps 204.

En configuration d'accouplement, les axes X203 et X204 sont coaxiaux.

Le corps 204 comprend une partie avant 241 et une partie arrière 242, qui sont assemblées de façon fixement solidaire. Les parties 241 et 242 sont successivement traversées par un passage interne 243 du corps 204, qu'elles délimitent pour la circulation du fluide.

La partie avant 241 présente une surface intérieure constituant une portion conique 245, qui délimite l'extrémité avant du passage 243. La portion conique 245 est centrée sur l'axe X204 et est tournée vers l'intérieur, contrairement à la portion conique 45. La portion conique 245 converge suivant la direction avant X241, c'est-à-dire qu'elle va en se rétrécissant dans cette direction.

La douille 205 est de forme tubulaire centrée sur l'axe X204. La douille 205 est agencée à l'intérieur de la portion conique 245, dans le passage 243, de sorte à pouvoir translater par rapport au corps 204 parallèlement à l'axe X204, le long de la portion conique 245. La douille est mobile entre une position avant, dite « position axiale de butée », montrée sur la figure 8, une position intermédiaire, dite « position axiale de serrage », montrée sur la figure 9, et une position arrière, dite « position axiale de retrait ».

La douille 205 ménage des logements 251, qui sont répartis autour de l'axe X204. Ici, seize logements 251 sont par exemple prévus. Chaque patin de serrage 206 est reçu au sein de l'un des logements 251, de sorte à être guidé en translation radiale dans ce logement 251. Il en résulte que les patins 206 et la douille 205 sont solidaires en translation par rapport au corps 204, suivant l'axe X204. Chaque patin 206 présente un talon 261, radialement interposé entre la portion conique 245 et la douille 205, pour être maintenu capturé par la douille 205, même en configuration désaccouplée. Contrairement au talon 61, le talon 261 est disposé radialement à l'extérieur de la douille 205. La translation centripète du patin 206 par rapport à la douille 205 est bornée à une position radiale interne du patin 206, dite « position radiale de butée », où le patin 206 est en butée contre la douille 205 dans la direction centripète. En configuration désaccouplée, comme montré sur la figure 8, les patins 206 sont en position radiale de butée.

Le ressort 208, qui est un ressort de compression, est axialement interposé entre la douille 205 et le corps 204, en particulier la partie arrière 242. Le ressort 208 est coaxial avec l'axe X204 et constitue un organe de rappel élastique, qui applique un effort de rappel élastique sur la douille 205, en prenant appui sur le corps 204, cet effort étant dirigé suivant la direction avant X241, pour tendre à ramener la douille 205 dans la direction X241. Plus précisément, le ressort 208 est ici interposé entre un épaulement axial arrière, disposé à l'extrémité arrière de la douille 205, et un épaulement axial avant formé par la partie arrière 242 du corps 204. Ainsi, le ressort 208 est positionné à l'arrière de la douille 205.

Chaque patin 206 présente avantageusement une surface conique 262, complémentaire de la portion conique 245, par l'intermédiaire de laquelle le patin 206 coopère mécaniquement avec la portion 245, en coulissant le long de la portion conique 245. Contrairement à la surface conique 62, la surface 262 est tournée vers l'extérieur vis à vis de l'axe X204. Par coopération mécanique entre la surface conique 262 et la portion conique 245, la position axiale de la douille 205 correspond à une position radiale des patins 206 par rapport au corps 204. Sous l'action du ressort 208, les patins 206 sont maintenus au contact de la portion conique 245 via la surface conique 262. Ainsi, la position radiale de butée des patins 206 correspond à la position axiale de butée de la douille 205.

A l'opposé de la surface 262, chaque patin 206 présente avantageusement une surface cylindrique 263, pour coopérer mécaniquement avec l'interface 233 du terminal 203 en configuration accouplée. Contrairement à la surface 63, la surface 263 est tournée radialement vers l'intérieur.

Comme montré sur la figure 9, en configuration accouplée, les patins 206 sont dans une position radiale interne, dite « position radiale de serrage », par rapport à la douille 205, pour ainsi coopérer avec l'interface 233. Cette position radiale de serrage correspond à la position axiale de serrage de la douille 205, grâce au renvoi d'angle de la portion conique 245.

La bague 207 présente une forme globalement tubulaire, centrée sur l'axe X204. Contrairement à la bague 7 et à la bague 107, la bague 207 est disposée à l'intérieur du passage 243. La bague 207 est mobile en translation par rapport au corps 204 suivant l'axe X204, entre une position avant, dite « position de repos », montrée sur la figure 8, et une position arrière, dite « position de déverrouillage. La bague 207 prend aussi une position intermédiaire, montrée sur la figure 9, dite « position d'appui ». Le guidage en translation de la bague 207 est avantageusement obtenu par coulissement de la bague 207 dans la partie arrière 242, à l'intérieur du passage 243.

De manière optionnelle, plutôt que d'être constituée d'une seule pièce, la bague 207 comprend une partie externe 290 et une partie interne 291. La partie externe 290 est tubulaire et centrée sur l'axe X204. C'est par l'intermédiaire de la partie externe 290 que la bague 207 coulisse par rapport au corps 204. On entend que la bague 207 est dans la position de repos en ce que la partie 290 est dans une position avant, que la bague 207 est dans la position d'appui en ce que la partie 290 est dans une position intermédiaire, et que la bague 207 est dans une position de déverrouillage en ce que la partie 290 est dans une position arrière.

La partie interne 291 est tubulaire et coaxiale avec la partie externe 290, et est montée coulissante à l'intérieur de la partie externe 290 suivant l'axe X204. En configuration accouplée, la partie interne 291 est maintenue en butée contre la partie externe 290 dans la direction X241, sous l'action d'un ressort 214, qui est un ressort axial de compression, axialement interposée entre la partie interne 291 et la partie arrière 242 du corps. Le ressort 214 constitue donc un organe de rappel élastique qui exerce un effort de rappel élastique contre la partie interne 291, par rapport au corps 204, dans la direction X241. En configuration désaccouplée, la partie interne 291 est maintenue en butée contre le corps 204 par le ressort 214, de sorte à fermer le passage interne 243 et ainsi interrompre la circulation du fluide au travers du passage 243, lorsque l'élément de raccord 201 est en configuration désaccouplée. A ce titre, la partie interne 291 constitue une « soupape » de l'élément de raccord 201. Par exemple, pour fermer le passage 243, la partie interne 291 porte un joint 215 à son extrémité arrière, qui vient en appui contre une collerette interne 292, formé par la partie arrière 242 du corps 204. La partie interne 291 obture alors une section du passage 243, délimitée par la collerette interne 292, par l'intermédiaire du joint 215 interposé radialement entre la partie interne 291 et la collerette 292. Néanmoins, en configuration accouplée, la partie interne 291 est maintenue dans une position intermédiaire par la partie externe 290 suivant l'axe X204, par rapport au corps 204, de sorte que la partie interne 291 n'obture pas la section du passage 243 délimité par la collerette 292, permettant ainsi la circulation du fluide.

Le ressort 209, qui est un ressort de compression, est axialement interposé entre la bague 207 et le corps 204. Le ressort 209 constitue un organe de rappel élastique pour appliquer un effort de rappel élastique dans la direction X241 sur la bague 207 par rapport au corps 204, tendant à ramener la bague 207 vers l'avant. De préférence, le ressort 209 est interposé entre la partie externe 290 de la bague 207 et la collerette 292 du corps 204. En pratique, le ressort 209 ramène donc la partie 290 vers la position de repos.

La bague 213 présente une forme globalement tubulaire, centrée sur l'axe X204. La bague 213 est avantageusement disposée autour du corps 204, en particulier autour de la partie avant 241, de sorte à pouvoir être actionnée par un utilisateur. La bague 213 est mobile en translation par rapport au corps 204 le long de l'axe X204, entre une position avant, dite position initiale, montrée sur la figure 8 et une position de déverrouillage. La bague 213 prend aussi une position intermédiaire, montrée sur la figure 9.

La bague 213 et la bague 207 sont solidaires en translation suivant l'axe X204, par rapport au corps 204. Pour cela, par exemple, la bague 213 est reliée à la bague 207 par au moins un tirant 285. En pratique, c'est la partie 290 et la bague 213 qui sont solidaires en translation, le tirant 285 reliant la partie 290 à la bague 213. Contrairement au tirant 185, le tirant 285 est radial, et se présente par exemple sous la forme d'une vis. Pour relier la bague 213 et la bague 207, le tirant 285 traverse avantageusement une lumière 293 de la partie avant 241 du corps 204, et une lumière 294 de la douille 205. Les lumières 293 et 294 sont suffisamment allongées suivant l'axe X204 pour autoriser le déplacement axial du tirant 285 qui les traverse, lors du déplacement axial solidaire des bagues 213 et 207 par rapport au corps 204 et/ou à la douille 205.

En configuration désaccouplée, comme montré sur la figure 8, la bague 207 et la bague 213 sont solidairement maintenues en position avant sous l'action du ressort 209, c'est-à-dire dans la position de repos de la bague 207 et dans la position initiale de la bague 213. Ce maintien est par exemple par mise en butée axiale de la bague 207 contre la partie arrière 242 du corps 204. Ici, la partie 290 de la bague 207 porte, à son extrémité arrière, un anneau externe, qui entre en butée dans la direction X241 contre un épaulement axial arrière interne formé par la partie 242.

La bague 207 comprend une face circonférentielle 272, ici formée par une face circonférentielle externe de la partie 290, par l'intermédiaire de laquelle la bague 207 est en contact étanche avec une paroi intérieure du corps 204, ici de la partie 241, délimitant le passage 243. Le contact étanche est effectué par l'intermédiaire d'un joint 211, reçu dans une gorge ménagée dans la partie 242. Ici, c'est la bague 207 qui porte le joint 211, contrairement à l'élément 1 où le corps 4 porte le joint 11. L'interface de contact entre le joint 211 et la face circonférentielle 272 forme un cercle coaxial avec l'axe X204, qui présente un diamètre d'étanchéité D211.

La bague 207 comprend aussi une face avant 274, ici formée par la partie 290, à son extrémité avant. La face 274 est conçue pour venir en contact étanche avec la face distale 235 du terminal 203, en configuration accouplée, sous l'action du ressort 209. En cela, la bague 207 constitue une « bague d'appui ». Le contact étanche est effectué par l'intermédiaire d'un joint 212 reçu dans une rainure frontale de la face avant 274. L'interface de contact entre le joint 212 et le terminal 203 forme un cercle coaxial avec l'axe X204, qui présente un diamètre d'étanchéité D212, lequel est inférieur au diamètre d'étanchéité D211 formé par le joint 211. De préférence, le joint 212 a un diamètre inférieur à celui du joint 211. Dans la configuration accouplée, le diamètre d'étanchéité D212 étant plus petit que le diamètre d'étanchéité D211, la pression du fluide reçu dans le passage 243 résulte en un effort appliqué sur la bague 207 par rapport au corps 204, dans la direction X241. Cet effort tend à renforcer l'étanchéité entre la bague 207 et le terminal 203. Dans la configuration accouplée, le terminal 203 maintient solidairement les bagues 213 et 207 en position intermédiaire par rapport au corps 204, contre l'effort fourni par les ressorts 209 et 214, par mise en appui de la face avant 274 contre la face distale 235 via le joint 212. Dans cette position intermédiaire, la bague 207 est dans la position d'appui et la bague 213 est dans la position intermédiaire.

En configuration désaccouplée, comme montré sur la figure 8, alors que la bague 207 est en position de repos, les patins 206 sont radialement distants de la bague 207 et ne sont donc pas radialement maintenus par la bague 207. Au contraire, les patins 206 se positionnent dans la position radiale de butée.

Pour accoupler le raccord, on place le terminal 203 et le corps 204 en alignant les axes X203 et X204, alors que l'extrémité distale du terminal 203 fait face à l'extrémité avant de l'élément de raccord 201. On rapproche alors le corps 204 et le terminal 203 l'un de l'autre. Avant l'entrée en contact du terminal 203 et de l'élément 201, l'élément 201 est dans la configuration désaccouplée montrée sur la figure 8.

Comme montré sur la figure 8, les patins 206 sont en position radiale de butée, n'étant pas maintenus en position radiale de retrait. A un premier stade du rapprochement, la face avant 274 de la bague d'appui 207 vient en contact étanche avec la face distale 235 du terminal 203, ici via le joint 212. En poursuivant le rapprochement, les patins 206 arrivent en contact avec un bord distal du passage 231, ce qui entraîne leur déplacement axial dans la direction X242 par rapport au corps 204. Les patins 206 entraînant avec eux la douille 205 selon le même mouvement axial, à l'encontre du ressort 208. Les patins 206 et la douille 205 se déplacent axialement jusqu'à la position axiale de serrage, et les patins 206 se déplacent radialement jusqu'à la position radiale de serrage, comme montré sur la figure 9, par coopération avec la portion conique 245. Dans cette position radiale de serrage, les patins 206 libèrent radialement entre eux un passage de taille égale ou légèrement supérieure à l'interface 233, de sorte que les patins 206 et la douille 205 s'arrêtent à la position de serrage, étant axialement retenus par l'effort généré par le ressort 208. L'interface 233 pénètre radialement entre les patins 206. La configuration accouplée de la figure 9 est atteinte.

Pour désaccoupler l'élément de raccord 201, on repousse le corps 204 en direction du terminal 203 suivant l'axe X204 pour réduire l'effort radial appliqué par les patins 206 sur l'interface 233 et ainsi désamorcer leur coincement. Simultanément ou successivement, on déplace la bague 213, et donc la bague 207, vers la position de déverrouillage, à l'encontre de l'effort du ressort 209. Lors du déplacement axial de la bague 207 dans la direction X242, la bague 207 entraîne la douille 205 dans la direction X242, par rapport au corps 204. Pour cela, par exemple, la partie 290 présente une collerette 273, qui est radiale externe, et qui entre en butée contre un épaulement axial avant de la douille 205, dans la direction X242. De préférence, la collerette 273 forme par ailleurs la face avant 274. Lorsque la bague 207 et la bague 213 atteignent la position de déverrouillage, la douille 205 est en position axiale de retrait, ce qui a mis les patins 206 en position radiale de retrait, ce qui libère le terminal 203. La bague 213 peut donc être qualifiée de « bague de manoeuvre ». En fait, l'ensemble constitué par les deux bagues 207 et 203 permet d'assurer les fonctions de bague d'appui et de bague de manoeuvre.

Une fois l'élément de raccord 201 et le terminal 203 libérés l'un de l'autre, on peut relâcher l'ensemble constitué par la bague 207 et la bague 213, qui reprennent la position avant, où la bague 207 est en position de repos et la bague 213 est en position initiale sous l'action du ressort 209. Le relâchement de la bague 207 autorise le ressort 208 à ramener la douille 205 jusqu'à la position axiale de butée. Le retour de la bague 207 en position de repos est autorisée grâce au fait que la collerette 273 est suffisamment petite pour pouvoir pénétrer radialement entre les patins 206, lorsque les patins 206 sont en position radiale de butée.

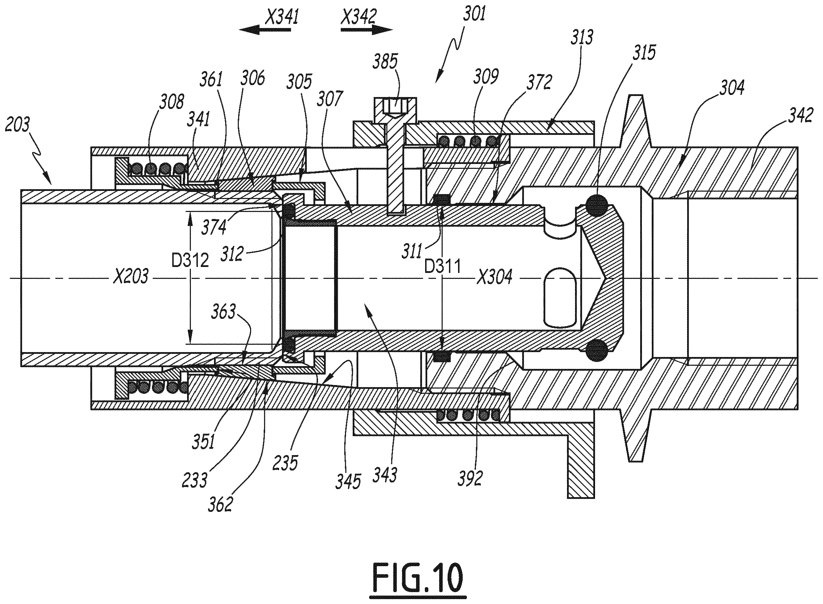

La figure 10 montre un élément de raccord 301 selon un quatrième mode de réalisation. Cet élément de raccord 301 comporte des caractéristiques communes avec les éléments de raccord 1, 101 et 201, qui sont identifiées avec le même signe de référence augmenté de 300 vis-à-vis des signes de références pour l'élément de raccord 1. Les caractéristiques décrites dans ce qui précède pour les éléments de raccord 1, 101 et 201 s'appliquent à l'élément de raccord 301, hormis pour les différences exposées ci-après. Dans ce qui suit, certaines caractéristiques identiques, ou basées sur les mêmes principes, entre l'élément 1, 101 et 201 et l'élément 301 ne sont pas réexpliquées et il convient de se référer à la description qui précède.

Sur la figure 10, l'élément 301 est montré en configuration accouplée. L'élément 301 est conçu pour une connexion rapide avec le terminal 203, visible sur la figure 10.

L'élément de raccord 301 comprend un corps 304, une douille 305, des patins de serrage 306, une bague 307, un ressort 308, un ressort 309, un joint 311, un joint 312, une bague 313, et un joint 315, qui fonctionnent de la même façon et on la même fonction que le corps 204, la douille 205, les patins de serrage 206, la bague 207, le ressort 208, le ressort 209, le joint 211, le joint 212, la bague 213 et le joint 215, sauf pour les différences ci-après.

En particulier, le corps 304 comprend une partie avant 341 avec une portion conique 345, et une partie arrière 342, correspondant respectivement à la partie avant 241, la portion conique 245 et la partie arrière 242. Le corps 304 définit un passage interne 343 qui correspond au passage 243. Un axe X304, une direction X341 et une direction X342 de l'élément raccord 301 correspondent respectivement à l'axe X204, la direction X241 et la direction X242. Le corps 304 comprend un épaulement axial arrière 392 qui correspond à la collerette 292. Les patins 306 comprennent des surfaces 362 et 363 et un talon 361 correspondent aux surfaces 262 et 263 et au talon 261. La douille 305 comprend des logements 351 correspond aux logements 251. La bague 313 et la bague 307 sont solidaires en translation axiale via un tirant 385, correspondant au tirant 285. La bague 307 présente une face avant 374, correspondant à la face avant 274, et une face circonférentielle 372, correspondant à la face circonférentielle 272.

Le ressort 308 diffère du ressort 208 en étant interposé entre un épaulement axial arrière, disposé à l'extrémité avant de la douille 305, et un épaulement axial avant, formé par la partie avant 341 du corps 304. Le ressort 308 se trouve donc à l'avant de la douille 305, alors que le ressort 208 est à l'arrière de la douille 205. Cela permet de réduire l'encombrement radial au détriment de l'encombrement axial de l'élément 301 par rapport à l'élément 201.

Le ressort 309 diffère du ressort 209 en étant interposé entre la bague 313 et le corps 304, alors que le ressort 209 est interposé entre la bague 207 et le corps 304. En particulier, le ressort 309 est interposé entre la bague 313 et la partie arrière 342.

La bague 307 diffère de la bague 207 en ce que la bague 307 est formé par une seule partie solidaire, alors que la bague 207 est comprend deux parties 290 et 291, coulissant l'une par rapport à l'autre. La bague 307 est mobile entre les positions de repos, d'appui et de déverrouillage, solidairement avec la bague 313 qui est mobile entre les positions initiale, intermédiaire et de déverrouillage correspondantes. Le ressort 214 est absent de l'élément 301, la bague 307 étant seulement soumise à l'action du ressort 309, par l'intermédiaire de la bague 313. La bague 307 comprend une face circonférentielle 372, par l'intermédiaire de laquelle la bague 307 est en contact étanche avec une paroi intérieure du corps 304, ici de la partie 342. Le contact étanche est effectué par l'intermédiaire d'un joint 311, reçu dans une gorge ménagée dans la partie 342. L'interface de contact entre le joint 311 et la face circonférentielle 372 forme un cercle coaxial avec l'axe X304, qui présente un diamètre d'étanchéité D311.

La bague 307 comprend aussi une face avant 374 à son extrémité avant. La face 374 est conçue pour venir en contact étanche avec la face distale 235 du terminal 203, en configuration accouplée, sous l'action du ressort 309. En cela, la bague 307 constitue une « bague d'appui ». Le contact étanche est effectué par l'intermédiaire d'un joint 312 reçu dans une rainure frontale de la face avant 374. L'interface de contact entre le joint 312 et le terminal 203 forme un cercle coaxial avec l'axe X304, qui présente un diamètre d'étanchéité D312, lequel est inférieur au diamètre d'étanchéité D311 formé par le joint 311. De préférence, le joint 312 a un diamètre inférieur à celui du joint 311. Dans la configuration accouplée, le diamètre d'étanchéité D312 étant plus petit que le diamètre d'étanchéité D311, la pression du fluide reçu dans le passage 343 résulte en un effort appliqué sur la bague 307 par rapport au corps 304, dans la direction X341. Cet effort tend à renforcer l'étanchéité entre la bague 307 et le terminal 203. La bague 307 porte à la fois les joints 311, 312 et 315, pour assurer à la fois la fonction de bague d'appui assurée par la partie 290, et la fonction de soupape assurée par la partie 291.

L'accouplement et le désaccouplement de l'élément de raccord 301 s'effectuent de la même façon que ceux de l'élément de raccord 201.

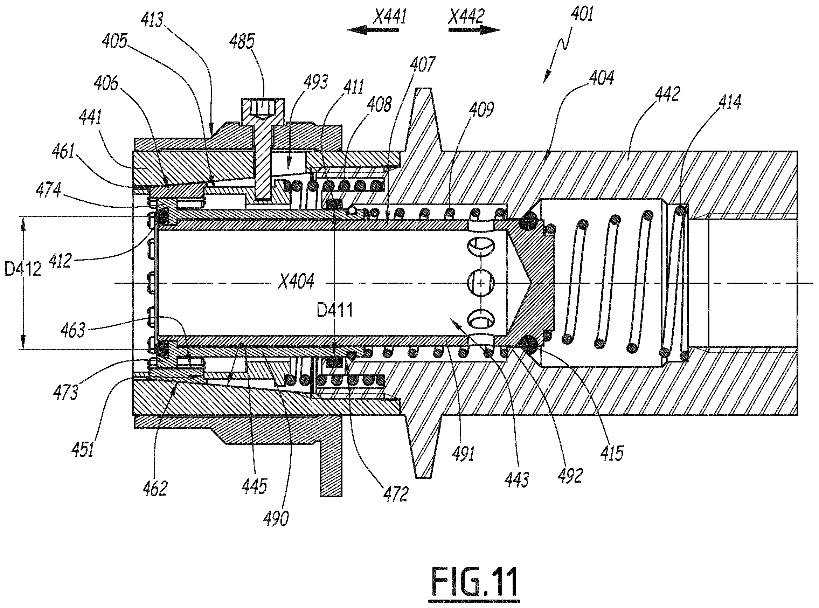

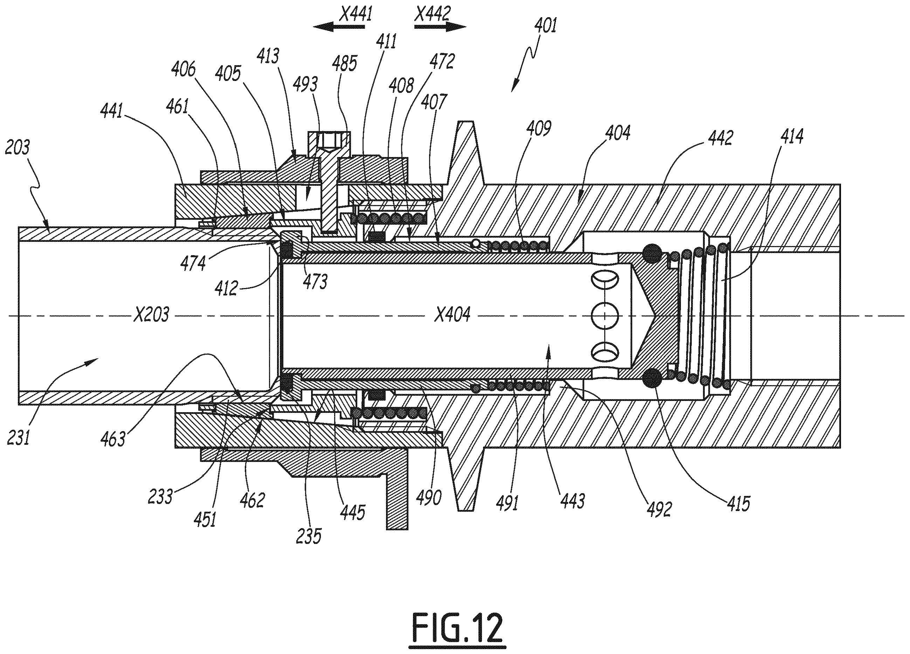

Les figures 11 et 12 montrent un élément de raccord 401 selon un cinquième mode de réalisation. Cet élément de raccord 401 comporte des caractéristiques communes avec les éléments de raccord 1, 101, 201 et 301, qui sont identifiées avec le même signe de référence augmenté de 400 vis-à-vis des signes de références pour l'élément de raccord 1. Les caractéristiques décrites dans ce qui précède pour les éléments de raccord 1, 101, 201 et 301 s'appliquent à l'élément de raccord 401, hormis pour les différences exposées ci-après. Dans ce qui suit, certaines caractéristiques identiques, ou basées sur les mêmes principes, entre l'élément 1, 101, 201 et 301 et l'élément 401 ne sont pas réexpliquées et il convient de se référer à la description qui précède.

Sur la figure 11, l'élément 401 est montré en configuration désaccouplée. Sur la figure 12, l'élément 401 est montré en configuration accouplée avec le terminal 203.

L'élément de raccord 401 comprend un corps 404, une douille 405, des patins de serrage 406, une bague 407, un ressort 408, un ressort 409, un joint 411, un joint 412, une bague 413, un ressort 414 et un joint 415, qui fonctionnent de la même façon et on la même fonction que le corps 204, la douille 205, les patins de serrage 206, la bague 207, le ressort 208, le ressort 209, le joint 211, le joint 212, la bague 213, le ressort 214 et le joint 215, sauf pour les différences exposées ci-après.

En particulier, le corps 404 comprend une partie avant 441 avec une portion conique 445, et une partie arrière 442, correspondant à la partie avant 241, la portion conique 245 et la partie arrière 242. Le corps 404 définit un passage interne 443 qui correspond au passage 243. Un axe X404, une direction X441 et une direction X442 de l'élément raccord 401 correspondent respectivement à l'axe X204, la direction X241 et la direction X242. Le corps 404 comprend une collerette 492 qui correspond à la collerette 292. Les patins 406 comprennent des surfaces 462 et 463 et un talon 461 correspondent aux surfaces 262 et 263 et au talon 261. La douille 405 comprend des logements 451 correspond aux logements 451. La bague 407 présente une partie 490, une partie 491, une face avant 474 et une face circonférentielle 472, qui correspondant respectivement à la partie 290, la partie 291, la face 274 et la face 272. Les ressorts 408, 409 et 414 sont disposés comme les ressorts 208, 209 et 214.

L'élément 401 diffère de l'élément 301 en ce que la bague 413 est solidaire en translation axiale avec la douille 405, sans être solidaire en translation avec la bague 407, alors que la bague 213 est solidaire en translation axiale avec la bague 207 sans être solidaire avec la douille 205. Pour obtenir la solidarité en translation axiale de la bague 413 et de la douille 405, on prévoit par exemple au moins un tirant 485. Comme le tirant 285, le tirant 485 est radial et se présente par exemple sous la forme d'une vis. Pour relier la bague 413 et la douille 405, le tirant 485 traverse avantageusement une lumière 493 de la partie avant 441 du corps 404. La lumière 493 est suffisamment allongée suivant l'axe X404 pour autoriser le déplacement axial du tirant 485 qui la traverse, lors du déplacement axial solidaire de la bague 413 et de la douille 405 par rapport au corps 404.

La bague 413 et la douille 405 sont solidairement ramenés dans la direction X441 par le ressort 408, alors que le ressort 409 n'agit pas sur la bague 413.

En configuration désaccouplée, par solidarité en translation, lorsque la bague 413 est en position initiale comme montré sur la figure 11, c'est-à-dire une position avant, la douille 405 est en position axiale de butée et donc les patins 406 sont en position radiale de butée. Lorsque la bague 413 est en position intermédiaire, la douille 405 est en position axiale de serrage et les patins sont en position radiale de serrage, comme montré sur la figure 12. Lorsque la bague 413 est en position de déverrouillage, c'est-à-dire une position arrière, la douille 405 est en position axiale de retrait et les patins 406 sont en position radiale de retrait.

La bague 407 comprend une face circonférentielle 472, ici formée par une face circonférentielle externe de la partie 490, par l'intermédiaire de laquelle la bague 407 est en contact étanche avec une paroi intérieure du corps 404, ici de la partie 442. Le contact étanche est effectué par l'intermédiaire d'un joint 411, reçu dans une gorge ménagée dans la partie 442. L'interface de contact entre le joint 411 et la face circonférentielle 472 forme un cercle coaxial avec l'axe X404, qui présente un diamètre d'étanchéité D411.

La bague 407 comprend aussi une face avant 474, ici formée par la partie 490, à son extrémité avant. La face 474 est conçue pour venir en contact étanche avec la face distale 235 du terminal 203, en configuration accouplée, sous l'action du ressort 409. En cela, la bague 407 constitue une « bague d'appui ». Le contact étanche est effectué par l'intermédiaire d'un joint 412 reçu dans une rainure frontale de la face avant 474. L'interface de contact entre le joint 412 et le terminal 203 forme un cercle coaxial avec l'axe X404, qui présente un diamètre d'étanchéité D412, lequel est inférieur au diamètre d'étanchéité D411 formé par le joint 411. De préférence, le joint 412 a un diamètre inférieur à celui du joint 411. Dans la configuration accouplée, le diamètre d'étanchéité 412 étant plus petit que le diamètre d'étanchéité D411, la pression du fluide reçu dans le passage 443 résulte en un effort appliqué sur la bague 407 par rapport au corps 404, dans la direction X441. Cet effort tend à renforcer l'étanchéité entre la bague 407 et le terminal 403.

L'accouplement de l'élément de raccord 401 s'effectue de la même façon que celui de l'élément de raccord 201.

Pour désaccoupler l'élément de raccord 401, on repousse le corps 404 en direction du terminal 203 suivant l'axe X404 pour réduire l'effort radial appliqué par les patins 406 sur l'interface 233 et ainsi désamorcer leur adhérence. Simultanément ou successivement, on déplace la bague 413 dans la direction X442 par rapport au corps, jusqu'à la position de déverrouillage. Ce déplacement entraîne solidairement le déplacement de la douille 405 jusqu'à la position axiale de retrait, et donc les patins jusqu'à la position radiale de retrait, par coopération avec la portion conique 445. L'action de la bague 413 permet donc de libérer le terminal 203 des patins 406, ce en quoi la bague 413 peut être qualifiée de bague de manoeuvre. Lorsque l'on retire le terminal 203, le ressort 409 déplace axialement la bague 407 dans la direction X441, jusqu'à sa position de repos. En position de repos de la bague 407, les patins 406 sont disposés radialement à distance de la bague 407, en position radiale de butée.

En variante, pour obtenir la position radiale d'appui des patins 406, on prévoit que les patins 406 arrivent en radialement butée vers l'intérieur contre une collerette 473 de la bague d'appui 407, correspondant à la collerette 273. La présence du talon 461 du talon n'est alors pas obligatoire. En variante encore, on peut même prévoir que la collerette 473 présente un encombrement propre à maintenir les patins 406 dans leur position radiale de retrait. Alors, le fonctionnement de l'élément de raccord obtenu correspond à celui de l'élément de raccord 101, où les patins de serrage ne frottent pas contre l'extrémité distale du terminal au début de l'accouplement.

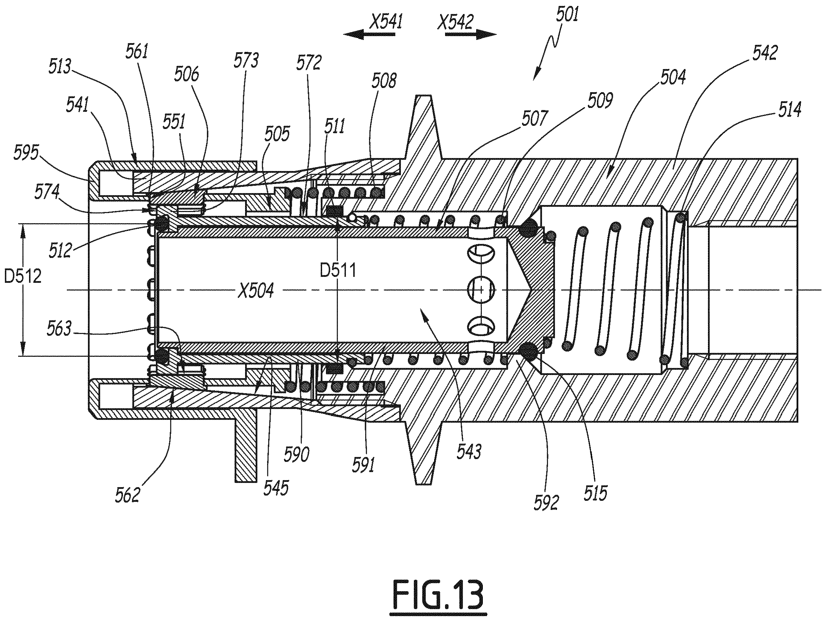

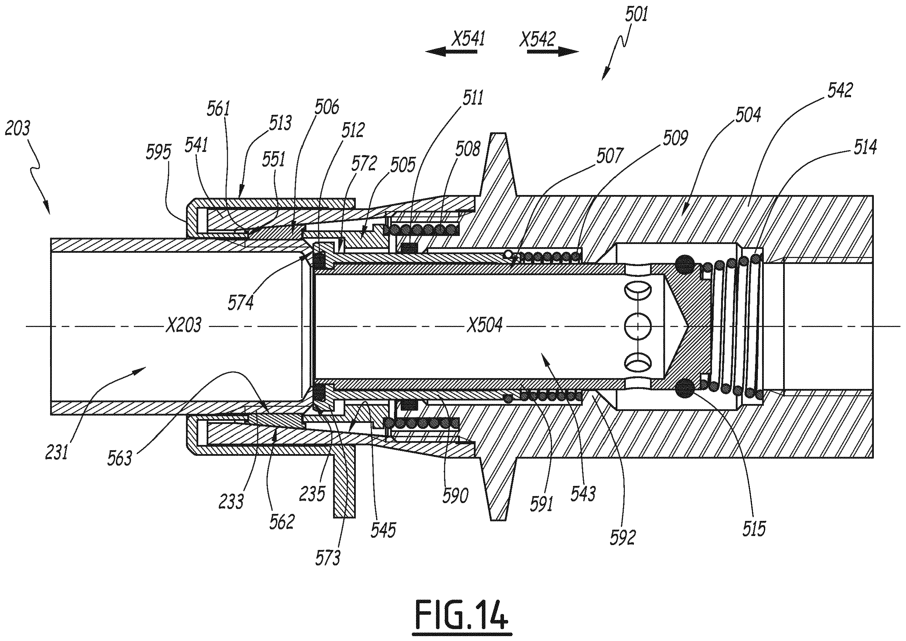

Les figures 13 et 14 montrent un élément de raccord 501 selon un sixième mode de réalisation. Cet élément de raccord 501 comporte des caractéristiques communes avec les éléments de raccord 1, 101, 201, 301 et 401, qui sont identifiées avec le même signe de référence augmenté de 500 vis-à-vis des signes de références pour l'élément de raccord 1. Les caractéristiques décrites dans ce qui précède pour les éléments de raccord 1, 101, 201, 301 et 401 s'appliquent à l'élément de raccord 501, hormis pour les différences exposées ci-après. Dans ce qui suit, certaines caractéristiques identiques, ou basées sur les mêmes principes, entre l'élément 1, 101, 201, 301 et 401 et l'élément 501 ne sont pas réexpliquées et il convient de se référer à la description qui précède.

Sur la figure 13, l'élément 501 est montré en configuration désaccouplée. Sur la figure 14, l'élément 501 est montré en configuration accouplée avec le terminal 203.

L'élément de raccord 501 comprend un corps 504, une douille 505, des patins de serrage 506, une bague 507, un ressort 508, un ressort 509, un joint 511, un joint 512, une bague 513, un ressort 514 et un joint 515, qui fonctionnent de la même façon et on la même fonction que le corps 404, la douille 405, les patins de serrage 406, la bague 407, le ressort 408, le ressort 409, le joint 411, le joint 412, la bague 413, le ressort 414 et le joint 415, sauf pour les différences exposées ci-après.

En particulier, le corps 504 comprend une partie avant 541 avec une portion conique 545, et une partie arrière 542, correspondant respectivement à la partie avant 441, la portion conique 445 et la partie arrière 442. Le corps 504 définit un passage interne 543 qui correspond au passage 443. Un axe X504, une direction X541 et une direction X542 de l'élément raccord 501 correspondent respectivement à l'axe X404, la direction X441 et la direction X442. Le corps 504 comprend une collerette 592 qui correspond à la collerette 492. Les patins 506 comprennent des surfaces 562 et 563 et un talon 561 correspondent aux surfaces 462 et 463 et au talon 461. La douille 505 comprend des logements 551 correspondant aux logements 451. La bague 507 présente une partie 590, une partie 591, une face avant 574, une collerette 573 et une face circonférentielle 572, qui correspondant respectivement à la partie 490, la partie 491, la face 474, la collerette 473 et la face 472. Les ressorts 508, 509 et 514 sont disposés comme les ressorts 408, 409 et 414.

L'élément 501 diffère de l'élément 401 en ce que la bague 513 et la douille 505 sont formées d'un seul tenant, pour être solidaires en translation suivant l'axe X504, plutôt que d'être reliées par le tirant 485. Pour être ainsi formées d'un seul tenant, une portion annulaire 595 relie radialement la bague 513 à la douille 505, de préférence en contournant l'extrémité avant du corps 504. Le tirant 485 et/ou la lumière 493 ne sont avantageusement pas nécessaire pour l'élément 501.

Quel que soit le mode de réalisation, on peut prévoir que l'élément de raccord est configuré pour être accouplé avec un terminal dont l'interface est lisse, c'est-à-dire en particulier non filetée.

## Revendications

1. Elément de raccord (1; 101; 201; 301; 401; 501), pour une connexion rapide d'une conduite de fluide (2) à un terminal (3 ; 203), le terminal (3; 203) disposant d'une interface (33; 233) à enveloppe cylindrique, l'élément de raccord comprenant un corps (4 ; 104 ; 204 ; 304 ; 404 ; 504) conçu pour être solidarisé avec la conduite de fluide (2) et délimitant un passage interne (43; 143; 243; 343; 443; 543) pour le fluide, le passage interne s'étendant suivant un axe d'emmanchement (X4; X104; X204; X304; X404; X504) de l'élément de raccord (1; 101; 201; 301; 401; 501), le corps (4 ; 104 ; 204 ; 304 ; 404 ; 504) comprenant une portion conique (45; 145; 245; 345; 445; 545), centrée sur l'axe d'emmanchement (X4; X104; X204; X304; X404; X504) ; et l'élément de raccord (1; 101; 201; 301; 401; 501) comprenant en outre :
- une douille (5; 105; 205; 305; 405; 505), qui est mobile en translation par rapport au corps suivant l'axe d'emmanchement ;
- un premier organe de rappel élastique (8; 108; 208; 308; 408; 508), qui applique un premier effort de rappel élastique (F8) sur la douille (5; 105; 205; 305; 405; 505), par rapport au corps (4 ; 104 ; 204 ; 304 ; 404 ; 504), suivant une direction avant (X41; X141 ; X241 ; X341; X441; X541) ; et
- des patins de serrage (6; 106; 206; 306; 406; 506), chaque patin de serrage étant reçu dans un logement (51; 151; 251 ; 351 ; 451 ; 551) respectif appartenant à la douille (5; 105; 205; 305; 405; 505), les patins de serrage étant déplacés en translation radialement par rapport à la douille, au sein de leur logement respectif, par coopération mécanique des patins de serrage avec la portion conique, entre :
• une position radiale de retrait des patins de serrage, pour que les patins de serrage soient distants de l'interface (33; 233) du terminal (3; 203), et
• une position radiale de serrage des patins de serrage, pour que les patins de serrage coopèrent mécaniquement avec l'interface du terminal (3; 203),
**caractérisé en ce que** l'élément de raccord (1 ; 101 ; 201 ; 301 ; 401 ; 501) comprend également :
- une bague d'appui (7 ; 107 ; 207 ; 307 ; 407 ; 507), qui est mobile en translation par rapport au corps (4 ; 104 ; 204 ; 304 ; 404 ; 504) suivant l'axe d'emmanchement (X4; X104; X204; X304; X404; X504) et qui comprend :
• une face circonférentielle (72 ; 172; 272 ; 372 ; 472 ; 572), par l'intermédiaire de laquelle la bague d'appui est en contact étanche avec le corps (4 ; 104 ; 204 ; 304 ; 404 ; 504), et
• une face avant (74 ; 174 ; 274 ; 374 ; 474 ; 574) perpendiculaire à l'axe d'emmanchement (X4 ; X104 ; X204 ; X304 ; X404 ; X504) ; et
- un deuxième organe de rappel élastique (9 ; 109 ; 209 ; 309 ; 409 ; 509), qui est constitué par un ressort, qui applique un deuxième effort de rappel élastique (F9) sur la bague d'appui, en prenant appui sur le corps (4 ; 104 : 204 ; 304 ; 404 ; 504), le deuxième effort de rappel élastique (F9) étant dirigé suivant la direction avant (X41 ; X141 ; X241 ; X341 ; X441 ; X541), pour mettre la bague d'appui en contact étanche avec le terminal (3; 203) par l'intermédiaire de la face avant.

2. Elément de raccord (1; 101; 201; 301; 401; 501) selon la revendication 1, dans lequel la portion conique (45; 145; 245; 345; 445; 545) définit un demi-angle d'ouverture (A45) dont la valeur est comprise entre 3 et 10 degrés, de préférence égale à 5 degrés.

3. Elément de raccord (1; 101; 201; 301; 401; 501) selon l'une quelconque des revendications précédentes, dans lequel chaque patin de serrage (6; 106; 206; 306; 406; 506) présente une surface cylindrique (63 ; 163 ; 263 ; 363 ; 463 ; 563) centrée sur l'axe d'emmanchement (X4; X104; X204; X304; X404; X504), par l'intermédiaire de laquelle le patin de serrage est conçu pour coopérer mécaniquement avec l'interface (33; 233) du terminal (3; 203) lorsque le patin de serrage est en position radiale de serrage.

4. Elément de raccord (1; 101; 201; 301; 401; 501) selon la revendication 3, dans lequel chaque surface cylindrique (63 ; 163 ; 263 ; 363 ; 463 ; 563) porte un filetage ou un traitement de surface augmentant son coefficient de frottement.

5. Elément de raccord (1; 101; 201; 301; 401; 501) selon l'une quelconque des revendications précédentes, dans lequel un diamètre d'étanchéité (D12 ; D112 ; D212 ; D312 ; D412 ; D512) entre la face avant (74 ; 174) et le terminal (3) est plus petit qu'un diamètre d'étanchéité (D11 ; D111 ; D211 ; D311 ; D411 ; D511) entre la face circonférentielle (72 ; 172 ; 272 ; 372 ; 472 ; 572) et le corps (4 ; 104 ; 204 ; 304 ; 404 ; 504).

6. Elément de raccord (1 ; 101) selon l'une quelconque des revendications précédentes, dans lequel le corps (4 ; 104) et la bague d'appui (7 ; 107) sont conçus pour délimiter, avec le terminal (3), un volume intérieur (75 ; 175), pour un échange de fluide entre le volume intérieur et le passage interne (43 ; 143).

7. Elément de raccord (101) selon l'une quelconque des revendications précédentes, dans lequel la bague d'appui (107) est configurée pour maintenir les patins de serrage (106) dans la position radiale de retrait lorsque l'élément de raccord et le terminal (3) sont désaccouplés.

8. Elément de raccord (201; 301; 401; 501) selon l'une quelconque des revendications précédentes, dans lequel la bague d'appui (207 ; 307 ; 407 ; 507) ferme le passage interne (243; 343; 443; 543) lorsque l'élément de raccord et le terminal (203) sont désaccouplés.

9. Elément de raccord (1 ; 101; 201; 301; 401; 501) selon l'une quelconque des revendications précédentes, dans lequel l'élément de raccord comprend une bague de manoeuvre (7 ; 113 ; 213 ; 313 ; 413 ; 513), qui est mobile jusqu'à une position de déverrouillage, pour libérer le terminal (3; 203) alors que les patins de serrage (6; 106; 206; 306; 406; 506) étaient en position radiale de serrage et coopéraient ainsi mécaniquement avec l'interface (33; 233) du terminal.

10. Elément de raccord (101; 401; 501) selon la revendication 9, dans lequel la bague de manoeuvre (113 ; 413 ; 513) et la douille (105; 405; 505) sont solidaires en translation par rapport au corps (104 ; 404 ; 504), suivant l'axe d'emmanchement (X104; X404; X504).

11. Elément de raccord (1; 101) selon l'une quelconque des revendications 1 à 7 et 9 ou 10, dans lequel la portion conique (45; 145) est tournée vers l'extérieur et diverge suivant la direction avant (X41 ; X141).

12. Elément de raccord (201; 301; 401; 501) selon l'une quelconque des revendications 1 à 10, dans lequel la portion conique (245; 345; 445; 545) est tournée vers l'intérieur et converge suivant la direction avant (X241 ; X341 ; X441 ; X541).

## Patentansprüche

1. Anschlusselement (1; 101; 201; 301; 401; 501) für einen Schnellanschluss einer Fluidleitung (2) an einen Anschlusspunkt (3; 203), wobei der Anschlusspunkt (3; 203) über eine Schnittstelle (33; 233) mit zylindrischem Mantel verfügt, das Anschlusselement umfassend einen Körper (4; 104; 204; 304; 404; 504), der dazu ausgelegt ist, fest mit der Fluidleitung (2) verbunden zu werden, und einen inneren Durchgang (43; 143; 243; 343; 443; 543) für das Fluid zu begrenzen, wobei sich der innere Durchgang entlang einer Einsteckachse (X4; X104; X204; X304; X404; X504) des Anschlusselements (1; 101; 201; 301; 401; 501) erstreckt, der Körper (4; 104; 204; 304; 404; 504) umfassend einen konischen Abschnitt (45; 145; 245; 345; 445; 545), der auf der Einsteckachse (X4; X104; X204; X304; X404; X504) zentriert ist; und das Anschlusselement (1; 101; 201; 301; 401; 501) ferner umfassend:
- eine Fassung (5; 105; 205; 305; 405; 505), die in Bezug auf den Körper entlang der Einsteckachse translatorisch bewegbar ist;
- ein erstes elastisches Rückholglied (8; 108; 208; 308; 408; 508), das eine erste elastische Rückholkraft (F8) auf die Fassung (5; 105; 205; 305; 405; 505) in Bezug auf den Körper (4; 104; 204; 304; 404; 504) in einer Vorwärtsrichtung (X41; X141; X241; X341; X441; X541) ausübt; und
- Klemmschuhe (6; 106; 206; 306; 406; 506), wobei jeder Klemmschuh in einer jeweiligen Aufnahme (51; 151; 251; 351; 451; 551) aufgenommen ist, die zu der Fassung (5; 105; 205; 305; 405; 505) gehört, wobei die Klemmschuhe innerhalb ihrer jeweiligen Aufnahme durch mechanisches Zusammenwirken der Klemmschuhe mit dem konischen Abschnitt radial in Bezug auf die Fassung translatorisch verschoben werden, zwischen:
• einer radialen Rückzugsstellung der Klemmschuhe, sodass die Klemmschuhe von der Schnittstelle (33; 233) des Anschlusspunkts (3; 203) beabstandet sind, und
• einer radialen Klemmstellung der Klemmschuhe, sodass die Klemmschuhe mechanisch mit der Schnittstelle des Anschlusspunkts (3; 203) zusammenwirken,
**dadurch gekennzeichnet, dass** das Anschlusselement (1; 101; 201; 301; 401; 501) auch Folgendes umfasst:
- einen Stützring (7; 107; 207; 307; 407; 507), der in Bezug auf den Körper (4; 104; 204; 304; 404; 504) entlang der Einsteckachse (X4; X104; X204; X304; X404; X504) translatorisch bewegbar ist und der Folgendes umfasst:
• eine Umfangsfläche (72; 172; 272; 372; 472; 572), über die der Stützring in dichtem Kontakt mit dem Körper (4; 104; 204; 304; 404; 504) ist, und
• eine Vorderseite (74; 174; 274; 374; 474; 574) senkrecht zu der Einsteckachse (X4; X104; X204; X304; X404; X504); und
- ein zweites elastisches Rückholglied (9; 109; 209; 309; 409; 509), das aus einer Feder besteht, die eine zweite elastische Rückholkraft (F9) auf den Stützring ausübt, indem sie an dem Körper (4; 104; 204; 304; 404; 504) anliegt, wobei die zweite elastische Rückholkraft (F9) in die vordere Richtung (X41; X141; X241; X341; X441; X541) gerichtet ist, um den Stützring über die Vorderseite in dichtem Kontakt mit dem Anschlusspunkt (3; 203) zu bringen.

2. Anschlusselement (1; 101; 201; 301; 401; 501) nach Anspruch 1, wobei der konische Abschnitt (45; 145; 245; 345; 445; 545) einen halben Öffnungswinkel (A45) definiert, dessen Wert zwischen 3 und 10 Grad, vorzugsweise gleich wie 5 Grad, ist.

3. Anschlusselement (1; 101; 201; 301; 401; 501) nach einem der vorherigen Ansprüche, wobei jeder Klemmschuh (6; 106; 206; 306; 406; 506) eine zylindrische Oberfläche (63; 163; 263; 363; 463; 563) aufweist, die auf der Einsteckachse (X4; X104; X204; X304; X404; X504) zentriert ist, über die der Klemmschuh dazu ausgelegt ist, mechanisch mit der Schnittstelle (33; 233) des Anschlusspunkts (3; 203) zusammenzuwirken, wenn der Klemmschuh in der radialen Klemmstellung ist.

4. Anschlusselement (1; 101; 201; 301; 401; 501) nach Anspruch 3, wobei jede zylindrische Oberfläche (63; 163; 263; 363; 463; 563) ein Gewinde oder eine Oberflächenbehandlung trägt, die ihren Reibungskoeffizienten erhöht.

5. Anschlusselement (1; 101; 201; 301; 401; 501) nach einem der vorherigen Ansprüche, wobei ein Dichtungsdurchmesser (D12; D112; D212; D312; D412; D512) zwischen der Vorderseite (74; 174) und dem Anschlusspunkt (3) kleiner ist als ein Dichtungsdurchmesser (D11; D111; D211; D311; D411; D511) zwischen der Umfangsfläche (72; 172; 272; 372; 472; 572) und dem Körper (4; 104; 204; 304; 404; 504).

6. Anschlusselement (1; 101) nach einem der vorherigen Ansprüche, wobei der Körper (4; 104) und der Stützring (7; 107) dazu ausgelegt sind, zusammen mit dem Anschlusspunkt (3) ein inneres Volumen (75; 175) für einen Fluidaustausch zwischen dem inneren Volumen und dem inneren Durchgang (43; 143) zu begrenzen.

7. Anschlusselement (101) nach einem der vorherigen Ansprüche, wobei der Stützring (107) konfiguriert ist, um die Klemmschuhe (106) in der radialen Rückzugsstellung zu halten, wenn das Anschlusselement und der Anschlusspunkt (3) entkoppelt sind.

8. Anschlusselement (201;301; 401; 501) nach einem der vorherigen Ansprüche, wobei der Stützring (207; 307; 407; 507) den inneren Durchgang (243; 343; 443; 543) verschließt, wenn das Anschlusselement und der Anschlusspunkt (203) entkuppelt sind.

9. Anschlusselement (1; 101; 201; 301; 401; 501) nach einem der vorherigen Ansprüche, wobei das Anschlusselement einen Betätigungsring (7; 113; 213; 313; 413; 513) umfasst, der in eine Entriegelungsstellung bewegbar ist, um den Anschlusspunkt (3; 203) freizugeben, während die Klemmschuhe (6; 106; 206; 306; 406; 506) in einer radialen Klemmstellung waren und dadurch mechanisch mit der Schnittstelle (33; 233) des Anschlusspunkts zusammenwirkten.

10. Anschlusselement (101; 401; 501) nach Anspruch 9, wobei der Betätigungsring (113; 413; 513) und die Fassung (105; 405; 505) in Bezug auf den Körper (104; 404; 504) entlang der Einsteckachse (X104; X404; X504) translatorisch fest miteinander verbunden sind.

11. Anschlusselement (1; 101) nach einem der Ansprüche 1 bis 7 und 9 oder 10, wobei der konische Abschnitt (45; 145) nach außen gerichtet ist und in die Vorwärtsrichtung (X41; X141) divergiert.

12. Anschlusselement (201; 301; 401; 501) nach einem der Ansprüche 1 bis 10, wobei der konische Abschnitt (245; 345; 445; 545) nach innen gerichtet ist und in die Vorwärtsrichtung (X241; X341; X441; X541) konvergiert.

## Claims

1. A connector element (1; 101; 201; 301; 401; 501), for a quick connect coupling of a fluid pipe (2) to a terminal (3; 203), the terminal (3; 203) having an interface (33; 233) with a cylindrical enclosure, the connector element comprising a body (4; 104; 204; 304; 404; 504) designed to be secured with the fluid pipe (2) and delimiting an inner passage (43; 143; 243; 343; 443; 543) for the fluid, the inner passage extending along a fitting axis (X4; X104; X204; X304; X404; X504) of the connector element (1; 101; 201; 301; 401; 501), the body (4; 104; 204; 304; 404; 504) comprising a conical portion (45; 145; 245; 345; 445; 545), centered on the fitting axis (X4; X104; X204; X304; X404; X504); and the connector element (1; 101; 201; 301; 401; 501) further comprising:
- a bush (5; 105; 205; 305; 405; 505), which is translatable relative to the body along the fitting axis;
- a first elastic return member (8; 108; 208; 308; 408; 508), which applies a first elastic return force (F8) on the bush (5; 105; 205; 305; 405; 505), relative to the body (4; 104; 204; 304; 404; 504), along a forward direction (X41; X141; X241; X341; X441; X541); and
- clamping pads (6; 106; 206; 306; 406; 506), each clamping pad being received in a respective housing (51; 151; 251; 351; 451; 551) belonging to the bush (5; 105; 205; 305; 405; 505), the clamping pads being moved in translation radially relative to the bush, within their respective housing, by mechanical cooperation of the clamping pads with the conical portion, between:
• a radial withdrawn position of the clamping pads, so that the clamping pads are remote from the interface (33; 233) of the terminal (3; 203), and
• a radial clamping position of the clamping pads, so that the clamping pads cooperate mechanically with the interface of the terminal (3; 203),
**characterized in that** the connector element (1; 101; 201; 301; 401; 501) also comprises:
- a bearing ring (7; 107; 207; 307; 407; 507), which is translatable relative to the body (4; 104; 204; 304; 404; 504) along the fitting axis (X4; X104; X204; X304; X404; X504) and which comprises:
• a circumferential face (72; 172; 272; 372; 472; 572), by means of which the bearing ring is in tight contact with the body (4; 104; 204; 304; 404; 504), and
• a front face (74; 174; 274; 374; 474; 574), perpendicular to the fitting axis (X4; X104; X204; X304; X404; X504); and
- a second elastic return member (9; 109; 209; 309; 409; 509), which is constituted by a spring, which applies a second elastic return force (F9) on the bearing ring, by bearing against the body (4; 104; 204; 304; 404; 504), to place the bearing ring in tight contact with the terminal (3; 203) by means of the front face, wherein the second elastic return force (F9) is directed along the forward direction (X41; X141; X241; X341; X441; X541).

2. The connector element (1; 101; 201; 301; 401; 501) according to claim 1, wherein the conical portion (45; 145; 245; 345; 445; 545) defines a half aperture angle (A45) whose value is between 3 and 10 degrees, preferably equal to 5 degrees.

3. The connector element (1; 101; 201; 301; 401; 501) according to any one of the preceding claims, wherein each clamping pad (6; 106; 206; 306; 406; 506) has a cylindrical surface (63; 163; 263; 363; 463; 563) centered on the fitting axis (X4; X104; X204; X304; X404; X504), by means of which the clamping pad is designed to cooperate mechanically with the interface (33; 233) of the terminal (3; 203) when the clamping pad is in the radial clamping position.

4. The connector element (1; 101; 201; 301; 401; 501) according to claim 3, wherein each cylindrical surface (63; 163; 263; 363; 463; 563) has a thread or a surface treatment increasing its coefficient of friction.

5. The connector element (1; 101; 201; 301; 401; 501) according to any one of the preceding claims, wherein a sealing diameter (D12; D112; D212; D312; D412; D512) between the front face (74; 174) and the terminal (3) is smaller than a sealing diameter (D11; D111; D211; D311; D411; D511) between the circumferential face (72; 172; 272; 372; 472; 572) and the body (4; 104; 204; 304; 404; 504).

6. The connector element (1; 101) according to any one of the preceding claims, wherein the body (4; 104) and the bearing ring (7; 107) are designed to delimit, with the terminal (3), an inner volume (75; 175), for an exchange of fluid between the inner volume and the inner passage (43; 143).

7. The connector element (101) according to any one of the preceding claims, wherein the bearing ring (107) is configured to keep the clamping pads (106) in the radial withdrawn position when the connector element and the terminal (3) are uncoupled.

8. The connector element (201; 301; 401; 501) according to any one of the preceding claims, wherein the bearing ring (207; 307; 407; 507) closes the inner passage (243; 343; 443; 543) when the connector element and the terminal (203) are uncoupled.

9. The connector element (1; 101; 201; 301; 401; 501) according to any one of the preceding claims, wherein the connector element comprises a maneuvering ring (7; 113; 213; 313; 413; 513), which is movable to an unlocked position, to release the terminal (3; 203) while the clamping pads (6; 106; 206; 306; 406; 506) were in the radial clamping position and were thus mechanically cooperating with the interface (33; 233) of the terminal.

10. The connector element (101; 401; 501) according to claim 9, wherein the maneuvering ring (113; 413; 513) and the bush (105; 405; 505) are secured in translation relative to the body (104; 404; 504), along the fitting axis (X104; X404; X504).

11. The connector element (1; 101) according to any one of claims 1 to 7 and 9 or 10, wherein the conical portion (45; 145) faces toward the outside and diverges along the forward direction (X41; X141).

12. The connector element (201; 301; 401; 501) according to any one of claims 1 to 10, wherein the conical portion (245; 345; 445; 545) faces toward the inside and converges along the forward direction (X241 ; X341; X441; X541).
